(19) Europäisches Patentamt
European Patent Office
Office européen des brevets

(11) EP 2 223 965 B1

(12) **EUROPEAN PATENT SPECIFICATION**

(45) Date of publication and mention of the grant of the patent:
**27.03.2013 Bulletin 2013/13**

(21) Application number: **08864216.0**

(22) Date of filing: **19.12.2008**

(51) Int Cl.:
***C08L 23/08*** *(2006.01)*
***C09D 153/02*** *(2006.01)*
***C09J 129/14*** *(2006.01)*
***C09D 159/00*** *(2006.01)*
***C08L 53/02*** *(2006.01)*
***C08L 29/14*** *(2006.01)*
***C09K 3/10*** *(2006.01)*

(86) International application number:
**PCT/JP2008/073232**

(87) International publication number:
**WO 2009/081877 (02.07.2009 Gazette 2009/27)**

# (54) THERMOPLASTIC POLYMER COMPOSITION AND MOLDED ARTICLE COMPOSED OF THE SAME

THERMOPLASTISCHE POLYMERZUSAMMENSETZUNG UND DARAUS HERGESTELLTER FORMARTIKEL

COMPOSITION POLYMÈRE THERMOPLASTIQUE ET ARTICLE MOULÉ À BASE DE CETTE COMPOSITION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.12.2007 JP 2007329350**

(43) Date of publication of application:
**01.09.2010 Bulletin 2010/35**

(73) Proprietor: **Kuraray Co., Ltd.**
**Okayama 710-0801 (JP)**

(72) Inventors:
- **MORIGUCHI, Nobuhiro**
  **Kamisu-shi**
  **Ibaraki 314-0197 (JP)**
- **TORIGOE, Shinichi**
  **Kurashiki-shi**
  **Okayama 710-0801 (JP)**
- **TOKUCHI, Kazuki**
  **Kurashiki-shi**
  **Okayama 710-0801 (JP)**

(74) Representative: **Müller-Boré & Partner Patentanwälte**
**Grafinger Straße 2**
**81671 München (DE)**

(56) References cited:
**EP-A1- 0 644 237**
**WO-A1-2005/063876**
**WO-A1-2009/020525**
**GB-A- 1 021 958**
**JP-A- 2004 155 824**
**JP-A- 2004 155 825**
**JP-A- 2005 082 675**
**JP-T- 2006 508 232**
**US-B2- 6 870 009**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 223 965 B1

## Description

### TECHNICAL FIELD

The present invention relates to a thermoplastic polymer composition excellent in flexibility, mechanical properties, and formability, and also excellent in adhesion to ceramics, metals, and polar polymers. It relates particularly to a thermoplastic polymer composition, comprising a styrene-based thermoplastic elastomer (A) and a polyvinyl acetal (B), wherein the thermoplastic elastomer (A) is a block copolymer, having a polymer block of an aromatic vinyl compound and a polymer block of a conjugated diene compound, or a hydrogenation product thereof, and wherein the polyvinyl acetal (B) is contained from 0.1 to 100 parts by mass in terms of 100 parts by mass of the thermoplastic elastomer (A). It also relates to a shaped article and an adhesive of the same.

### BACKGROUND ART

For the purpose of glass fixation, prevention of glass breakage, sealing, and the like, a shaped article of a rubber or an elastic material, called as window molding or gasket, is used for a window frame or the like of an automobile or a building by being adhered to a glass for integration. Although flexible polyvinyl chloride has been mainly used conventionally, the material is promoted to be converted to thermoplastic elastomers in recent years from the perspectives of environmental issues, recycling, weight reduction, and the like. Among all, since compositions containing a styrene-based thermoplastic elastomer are excellent in the balance of flexibility and mechanical properties, they are proposed as one of the preferred materials for this application (for example, refer to Patent Documents 1 through 4). Such a styrene-based thermoplastic elastomer here is a block copolymer having a styrene-based polymer block and a diene-based polymer block or a hydrogenation product thereof.

However, since a styrene-based thermoplastic elastomer composition and an olefin-based thermoplastic elastomer composition and so on are materials of low polarity, they are poor in adhesion to ceramics, such as a glass, and metals and are difficult to be melt adhered. Therefore, in order to make a styrene-based thermoplastic elastomer composition or an olefin-based thermoplastic elastomer composition to be adhered to a ceramic or a metal, it is required to apply an adhesive or treat the surface of the ceramic or the metal in advance.

For example, although styrene-based thermoplastic elastomer compositions are disclosed conventionally that are suitable for vehicle glass molding, a chlorinated polyolefin adhesive is applied to a glass plate in advance to make the adhesion to glass to be obtained (refer to Patent Documents 1 and 2). A method is also known in which modified polyolefin grafted with maleic anhydride is dissolved in an organic solvent and used as an adhesive for application to adhere a styrene-based thermoplastic elastomer composition to a glass (refer to Patent Document 3). Further, a method is known in which a styrene-based or olefin-based thermoplastic elastomer containing a polyolefin-based resin containing a carboxyl group or anhydride thereof is used for a glass plate surface treated with a silane coupling agent in advance for adhesion (refer to Patent Document 4). Furthermore, a method is disclosed in which a glass surface is treated with an organosilane agent and chlorinated polyolefin in advance for adhesion to a thermoplastic resin (refer to Patent Document 5).

[Patent Document 1] JP 2006-291019A
[Patent Document 2] JP 2006-206715A
[Patent Document 3] JP 2004-195717A
[Patent Document 4] JP 63-25005A
[Patent Document 5] JP 6-23910A

### SUMMARY OF THE INVENTION

### PROBLEMS TO BE SOLVED BY THE INVENTION

However, the methods of applying an adhesive on a glass plate surface or on a thermoplastic elastomer composition surface or the methods of pretreating a glass plate surface as described in Patent Documents 1 through 5 have problems of, not only complicating the process, but also decreasing the productivity and increasing the manufacturing costs. There also used to be a possibility that the adhesive contaminates an unadhered face of the glass. Further, there also used to be cases of unable to obtain sufficient adhesion strength even when applying an adhesive or pretreating a glass surface. Accordingly, a thermoplastic elastomer composition having improved adhesion to ceramics, such as a glass, and metals has been demanded.

In view of above issues, it is an object of the present invention to provide a thermoplastic polymer composition

having good flexibility as a thermoplastic elastomer composition, excellent in mechanical properties and formability, and itself having excellent adhesion to ceramics, metals, and polar polymers. It is also an object of the present invention to provide a shaped article using such a thermoplastic polymer composition, and particularly a shaped article adhered to ceramics, metals, and polar polymers. Further, it is an object of the present invention to provide an adhesive using such a thermoplastic polymer composition.

MEANS FOR SOLVING THE PROBLEMS

The problems are solved by providing a thermoplastic polymer composition, comprising a styren-based thermoplastic elastomer (A) and a polyvinyl acetal (B), wherein

The elastomer (A) is a block copolymer, having a polymer block of an aromatic vinyl compound and a polymer block of a conjugated diene compound, or a hydrogenation product thereof. The polyvinyl acetal (B) is contained from 0.1 to 100 parts by mass in terms of 100 parts by mass of the thermoplastic elastomer (A). It is preferred that particles of the polyvinyl acetal (B) are dispersed in a matrix of the thermoplastic elastomer (A), and more preferred that the polyvinyl acetal (B) has an average particle diameter of 5 μm or less. It is also preferred that JIS-A hardness according to JIS K6253 is 93 or less.

It is preferred that the polyvinyl acetal (B) is obtained by acetalizing polyvinyl alcohol having an average degree of polymerization of from 100 to 4000. It is also preferred that a degree of acetalization of the polyvinyl acetal (B) is from 55 to 88 mol%. In addition, it is also preferred that the polyvinyl acetal (B) is polyvinyl butyral.

In a preferred embodiment, the thermoplastic elastomer (A) is a thermoplastic elastomer (A1) not containing a polar functional group. In another preferred embodiment, the thermoplastic elastomer (A) is thermoplastic elastomer (A2) containing a polar functional group. In a particularly preferred embodiment, the thermoplastic elastomer (A) comprises both a thermoplastic elastomer (A1) not containing a polar functional group and a thermoplastic elastomer (A2) containing a polar functional group, and a ratio by weight (A2/A1) thereof is from 0.1/100 to 100/0.1.

One embodiment of the present invention is a shaped article, comprising the thermoplastic polymer composition. A preferred embodiment is a shaped article, wherein the thermoplastic polymer composition is adhered to a ceramic or a metal, and a particularly preferred embodiment is a shaped article, wherein the thermoplastic polymer composition is adhered to a glass. At this time, it is particularly preferred that a continuous layer of the polyvinyl acetal (B) exists at an interface between the thermoplastic polymer composition and the ceramic or the metal. Another preferred embodiment is a shaped article, wherein the thermoplastic polymer composition is adhered to a polar polymer having a functional group selected from the group consisting of amide group, ester group, carbonate group, acetal group, ether group, sulfide group, nitrile group, hydroxyl group, carbonyl group, carboxyl group, amino group, and sulfonic acid group. At this time, it is preferred that the polar polymer is at least one selected from the group consisting of polyamide, polyester, polycarbonate, polyacetal, polyphenylene sulfide, ABS resin (acrylonitrile-butadiene-styrene copolymer), polyvinyl alcohol, ethylene-vinyl alcohol copolymer, polyvinyl acetal, polyvinyl acetate, poly(meth)acrylate, polyether, polyketone, ionomer, polyurethane, and polyurea. Another preferred embodiment is an adhesive, comprising the thermoplastic polymer composition.

EFFECTS OF THE INVENTION

The thermoplastic polymer composition of the present invention has good flexibility as a thermoplastic elastomer composition, is excellent in mechanical properties and formability, and itself has excellent adhesion to ceramics, metals, and polar polymers. Accordingly, it can provide not only simplification of process to make a thermoplastic polymer composition to be adhered to ceramics, metals, and polar polymers and cost reduction, but also shaped articles of complex structure and shape. It is useful for a wide range of applications as a shaped article or a structure adhered to ceramics, metals, and polar polymers, such as window moldings or gaskets used for window frames of automobiles or buildings, sealants or the like for glass members, automobile components, components or cases for home appliances, electronics, or the like, for example. It is also useful as an adhesive to adhere various materials.

BRIEF DESCRIPTION OF DRAWINGS

Fig. 1 is an electron micrograph of observed morphology of a thermoplastic polymer composition sheet of Example 1.
Fig. 2 is an electron micrograph of observed morphology of a thermoplastic polymer composition sheet of Example 4.
Fig. 3 is an electron micrograph of observed morphology of a thermoplastic polymer composition sheet of Example 5.
Fig. 4 is an electron micrograph of observed morphology of a thermoplastic polymer composition sheet of Example 8.
Fig. 5 is a scanning probe micrograph of observed morphology of a glass adhesion interface of Example 1.

Fig. 6 is a scanning probe micrograph of observed morphology of a glass adhesion interface of Example 4.
Fig. 7 is a scanning probe micrograph of observed morphology of a glass adhesion interface of Example 5.
Fig. 8 is a scanning probe micrograph of observed morphology of a glass adhesion interface of Example 8.

BEST MODE OF CARRYING OUT THE INVENTION

A thermoplastic polymer composition of the present invention comprises a thermoplastic elastomer (A) and a polyvinyl acetal (B), wherein the thermoplastic elastomer (A) is a styrene-based thermoplastic elastomer.

Which is a block copolymer, having a polymer block of an aromatic vinyl compound (hereinafter, may be referred to as "aromatic vinyl polymer block") and a polymer block of a conjugated diene compound (hereinafter, may be referred to as "conjugated diene polymer block"), or a hydrogenation product thereof is preferably used.

Such an aromatic vinyl compound constituting the aromatic vinyl polymer block in the block copolymer having an aromatic vinyl polymer block and a conjugated diene polymer block or a hydrogenation product thereof may include, for example, aromatic vinyl compounds, such as styrene, α-methylstyrene, β-methylstyrene, o-, m-, p-methylstyrene, t-butylstyrene, 2,4,6-trimethylstyrene, monofluorostyrene, difluorostyrene, monochlorostyrene, dichlorostyrene, methoxystyrene, 1,3-vinylnaphthalene, vinylanthracene, indene, and acenaphthylene. The aromatic vinyl polymer block may contain structural units only derived from one of the aromatic vinyl compounds and may also contain structural units derived from two or more types. Among them, the aromatic vinyl polymer block is preferred to mainly contain structural units derived from styrene. At this time, the structural units derived from styrene is preferably 80 weight% or more based on the weight of the aromatic vinyl polymer block, and more preferably 90 weight%.

The aromatic vinyl polymer block may also have a small amount of structural units derived from another copolymerizable monomer together with the structural units derived from an aromatic vinyl compound. At this time, the proportion of the structural units derived from such another copolymerizable monomer is preferably 20 weight% or less based on the weight of the aromatic vinyl polymer block, and more preferably 10 weight% or less. Such another copolymerizable monomer may include, for example, a monomer capable of ionic polymerization, such as 1-butene, pentene, hexene, butadiene, isoprene, and methyl vinyl ether.

The conjugated diene compound constituting the conjugated diene polymer block in the block copolymer or a hydrogenation product thereof may include isoprene, butadiene, hexadiene, 2,3-dimethyl-1,3-butadiene, and 1,3-pentadiene. The conjugated diene polymer block may contain structural units only derived from one of these conjugated diene compounds and may also contain structural units derived from two or more types. Among them, the conjugated diene polymer block is preferred to mainly contain structural units one of or both isoprene and butadiene. At this time, the structural units derived from isoprene or butadiene are preferably 80 weight% or more based on the weight of the conjugated diene polymer block, and more preferably 90 weight%.

The bonding mode of the conjugated diene compound in the conjugated diene polymer block is not particularly limited. For example, a case of butadiene can employ 1,2-bond and/or 1,4-bond and a case of isoprene can employ 1,2-bond, 3,4-bond, and/or 1,4-bond, respectively. Among them, in a case of the conjugated diene polymer block of butadiene, a case of that of isoprene, or a case of that of both isoprene and butadiene, a total sum of 1,2-bonds and 3,4-bonds are preferably from 1 to 95 mol% in the conjugated diene polymer block.

In a case that the conjugated diene polymer block has structural units derived from two or more types of conjugated diene compounds, the bonding mode thereof can be random, tapered, partially blocked, or a combination of two or more types thereof.

The conjugated diene polymer block may also have a small amount of structural units derived from another copolymerizable monomer together with the structural units derived from the conjugated diene compound. At this time, the proportion of the structural units derived from such another copolymerizable monomer is preferably 20 weight% or less based on the weight of the conjugated diene polymer block, and more preferably 10 weight% or less. Such another copolymerizable monomer may include, for example, aromatic vinyl compounds, such as styrene, α-methylstyrene, β-methylstyrene, o-, m-, p-methylstyrene, t-butylstyrene, 2,4,6-trimethylstyrene, monofluorostyrene, difluorostyrene, monochlorostyrene, dichlorostyrene, methoxystyrene, 1,3-vinylnaphthalene, vinylanthracene, indene, and acenaphthylene, and a monomer capable of ionic polymerization, such as 1-butene, pentene, hexene, butadiene, isoprene, and methyl vinyl ether.

The bonding mode between the aromatic vinyl polymer block and the conjugated diene polymer block in the block copolymer or a hydrogenation product thereof is not particularly limited, and it may be any bonding mode of linear, branched, radial, or a combination of two or more thereof, and is preferably a linear bonding mode. Examples of the thermoplastic elastomer (A) having a linear bonding mode may include, when A represents an aromatic vinyl polymer block and B does a conjugated diene polymer block, diblock copolymer expressed as A-B, triblock copolymer expressed as A-B-A or B-A-B, tetrablock copolymer expressed as A-B-A-B or B-A-B-A, or polyblock copolymer in which five or more of A and B are bonded linearly. Among them, it is preferred that the thermoplastic elastomer (A) is a triblock copolymer expressed as A-B-A from the aspects of elasticity, mechanical properties, and handling properties.

The block copolymer or a hydrogenation product thereof preferably has a part or all of unsaturated double bonds in the conjugated diene polymer block thereof being hydrogenated (hereinafter, may be referred to as "hydrogenated") for better heat resistance and weather resistance. At that point, the conjugated diene polymer block preferably has a hydrogenation ratio of 50 mol% or more, more preferably 60 mol% or more, and even more preferably 70 mol% or more.

In addition, the block copolymer or a hydrogenation product thereof preferably contains from 5 to 75 weight% of structural units derived from the aromatic vinyl compound based on the total weight thereof before hydrogenation from the aspects of the elasticity, the flexibility, mechanical properties, and the like, and more preferably from 5 to 45 weight%.

Further, although the block copolymer or a hydrogenation product thereof is not particularly limited in the molecular weights of the aromatic vinyl polymer block and the conjugated diene polymer block, it is preferred that, before hydrogenation, the aromatic vinyl polymer block has a number average molecular weight within a range of from 500 to 100,000 and the conjugated diene polymer block has a number average molecular weight of from 2,500 to 400,000. In addition, the block copolymer or a hydrogenation product thereof before hydrogenation preferably has a number average molecular weight in total within a range of from 3,000 to 500,000 from the aspects of mechanical properties, forming workability, and the like. It should be noted that a number average molecular weight herein means a value obtained by gel permeation chromatography (GPC) according to a standard polystyrene calibration curve.

The block copolymer or a hydrogenation product thereof is not particularly limited in a production method and it can be produced by a conventional known method, and may be produced by any of ionic polymerization methods, such as anionic polymerization and cationic polymerization, single site polymerization methods, radical polymerization methods, and the like, for example. In a case of an anionic polymerization method, for example, the aromatic vinyl compound and the conjugated diene compound can be sequentially polymerized in an inert organic solvent, such as n-hexane and cyclohexane, using an alkaline lithium compound and the like as a polymerization initiator to produce a block copolymer having a desired molecular structure and molecular weight, followed by adding an active hydrogen compound, such as alcohols, carboxylic acids, and water, to stop polymerization for production. Such a block copolymer thus produced can be hydrogenated in the presence of a hydrogenation catalyst in an inert organic solvent preferably in accordance with a known method to obtain a hydrogenated thermoplastic block copolymer.

As the styrene-based thermoplastic elastomer, a block copolymer having an aromatic vinyl polymer block and a polymer block of isobutylene (hereinafter, may be referred to as "isobutylene polymer block") is also used preferably. Such a block copolymer is easy to be produced industrially and cationic polymerization is employed preferably.

The block copolymer preferably has 50 mol% or more of structural units derived from isobutylene in terms of the total structural units constituting the block copolymer from the perspective of durability and mechanical performance in a shaped article, and particularly preferably has structural units derived from isobutylene within a range of from 50 to 90 mol% and also structural units derived from an aromatic vinyl compound within a range of from 50 to 10 mol%. The isobutylene polymer block may also contain structural units derived from a monomer capable of cationic polymerization different from isobutylene as long as it is in a small amount. At this time, the proportion of the structural units derived from such another monomer is preferably 20 weight% or less based on the weight of the isobutylene polymer block, and more preferably 10 weight% or less. Examples of the cationic polymerizable monomer different from isobutylene may include styrene-based monomers, vinyl ethers, such as methyl vinyl ether, ethyl vinyl ether, isobutyl vinyl ether, 2-chloroethyl vinyl ether, and 2-methoxyethyl vinyl ether; olefins, such as ethylene, propylene, 3-methyl-1-butene, and 4-methyl-1-pentene; indene; acenaphthylene; and N-vinylcarbazole. The isobutylene polymer block preferably has a number average molecular weight of from 2,500 to 400, 000, and the aromatic vinyl polymer block preferably has a number average molecular weight same as that of the block copolymer or a hydrogenation product thereof having an aromatic vinyl polymer block and a conjugated diene polymer block.

Further, a block copolymer having an aromatic vinyl polymer block, a conjugated diene polymer block, and a polymer block of (meth)acrylate (hereinafter, may be referred to as " (meth) acrylate polymer block") is also preferably used as such a styrene-based thermoplastic elastomer.

Such a (meth)acrylate monomer constituting the (meth)acrylate polymer block in this block copolymer may include, for example, methyl methacrylate, ethyl methacrylate, propyl methacrylate, sec-butyl methacrylate, tert-butyl methacrylate, glycidyl methacrylate, trifluoromethyl methacrylate, tert-butyl acrylate, and the like, and methyl methacrylate is particularly preferred. The (meth)acrylate polymer block may contain structural units only derived from one of the (meth)acrylate monomers or may also contain structural units derived from two or more types. Among them, the (meth) acrylate polymer block is preferred to mainly contain the structural units derived from a (meth) acrylate monomer. At this time, the structural units derived from a (meth)acrylate monomer are preferably 80 weight% or more based on the weight of the (meth)acrylate polymer block, and more preferably 90 weight%. The (meth)acrylate polymer block preferably has a number average molecular weight of from 1,000 to 250,000, and the aromatic vinyl polymer block and the conjugated diene polymer block preferably have number average molecular weights same as those of the block copolymer or a hydrogenation product thereof having an aromatic vinyl polymer block and a conjugated diene polymer

block.

The polyvinyl acetal (B) is normally a resin having a repeating unit shown by a formula (I) below.

[chem. 1]

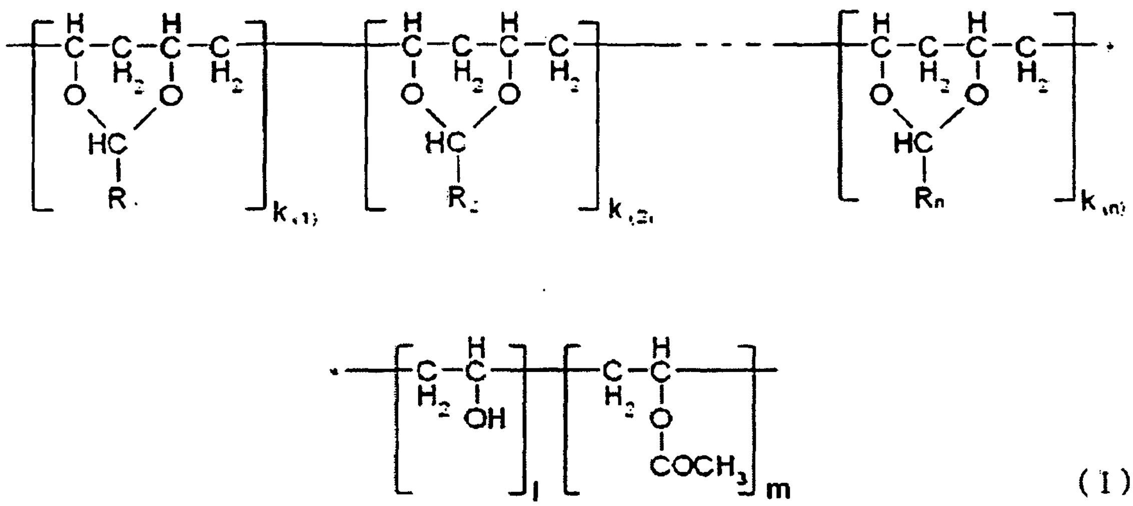

(I)

In the above formula (I), n is the type (natural number) of aldehyde used for acetalization, $R_1$, $R_2$, ..., and $R_n$ are an alkyl residue or a hydrogen atom of aldehyde used for the acetalization reaction, $k_{(1)}$, $k_{(2)}$, ..., and $k_{(n)}$ are respective proportions (molar ratio) of acetal units containing the aldehyde residues $R_1$, $R_2$, ... , and $R_n$, l is a proportion (molar ratio) of vinyl alcohol units, and m is a proportion (molar ratio) of vinyl acetate units. It should be noted that $k_{(1)} + k_{(2)} + ... + k_{(n)} + l + m = 1$ and that either of $k_{(1)}$, $k_{(2)}$, ..., and $k_{(n)}$, l and m may be zero. Each repeating unit is not particularly limited by an arrangement sequence thereof, and may be arranged randomly, may be arranged in blocks, and may be arranged to taper.

The polyvinyl acetal (B) used for the present invention can be obtained, for example, by reacting polyvinyl alcohol and aldehyde.

The polyvinyl alcohol used for the production of the polyvinyl acetal (B) normally has an average degree of polymerization of from 100 to 4,000, preferably from 100 to 3,000, and more preferably from 100 to 2,000. When the polyvinyl alcohol has an average degree of polymerization of less than 100, the production of the polyvinyl acetal (B) is prone to become difficult and the handling properties are prone to become worse. On the other hand, when the polyvinyl alcohol has an average degree of polymerization of exceeding 4, 000, the melt viscosity when melt kneaded is prone to become high and the production of a thermoplastic polymer composition of the present invention is prone to become difficult. Here, the average degree of polymerization of the polyvinyl alcohol can be measured in compliance with JIS K 6726. Specifically, it can be obtained from a limiting viscosity of polyvinyl alcohol that is measured in water at 30°C after resaponification and purification.

A method of producing polyvinyl alcohol is not particularly limited, and it is possible to use a product of, for example, saponifying polyvinyl acetate or the like with alkali, acid, aqueous ammonia, or the like. Although the polyvinyl alcohol may also be completely saponified, it may also be partially saponified polyvinyl alcohol that is partially saponified. It is preferred to use those having a degree of saponification of 80 mol% or more.

It is also possible to use, as the polyvinyl alcohol, a copolymer of vinyl alcohol and a monomer copolymerizable with vinyl alcohol, such as an ethylene-vinyl alcohol copolymer or a partially saponified ethylene-vinyl alcohol copolymer. It is further possible to use modified polyvinyl alcohol in which carboxylic acid or the like is partly introduced. These polyvinyl alcohols may be used singly one type and may also be used two or more types in combination.

The aldehyde used for the production of the polyvinyl acetal (B) is not particularly limited. It may include, for example, formaldehyde (including paraformaldehyde), acetaldehyde (including paraacetaldehyde), propionaldehyde, butyraldehyde, n-octyl aldehyde, amyl aldehyde, hexyl aldehyde, heptyl aldehyde, 2-ethylhexyl aldehyde, cyclohexyl aldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde. These aldehydes may be used one type singly and may also be used two or more types in combination. Among these aldehydes, butyraldehyde is preferably used from the perspective of ease of production.

Such a polyvinyl acetal (B) is called particularly as polyvinyl butyral that is obtained by acetalizing polyvinyl alcohol using butyraldehyde. In the present invention, polyvinyl butyral having a proportion (refer to an expression below) of butyral units of exceeding 0.9 is preferred among the acetal units existing in the polyvinyl acetal (B). That is, when $R_1 = C_3H_7$ (residue of butyraldehyde) in the structural formula of the polyvinyl acetal (B) expressed by the formula (I), those satisfying $k_{(1)}/(k_{(1)} + k_{(2)} + ... + k_{(n)}) > 0.9$.

The polyvinyl acetal (B) used for the present invention preferably has a degree of acetalization of from 55 to 88 mol%. Such a polyvinyl acetal (B) that has a degree of acetalization less than 55 mol% is expensive in manufacturing costs, is not easily available, and is poor in melt workability. On the other hand, such a polyvinyl acetal (B) that has a degree of acetalization exceeding 88 mol% is very difficult to manufacture, and is not economical as it requires a long period of time for an acetalization reaction. The polyvinyl acetal (B) more preferably has a degree of acetalization of 60 mol% or more, even more preferably 70 mol% or more, and particularly preferably 75 mol% or more. The lower a degree of acetalization of the polyvinyl acetal (B), the larger a proportion of the hydroxyl groups in the polyvinyl acetal (B), which is advantageous for the adhesion to a glass, while it becomes low in the affinity and compatibility with the thermoplastic elastomer (A), the dispersion particle diameter of the polyvinyl acetal (B) becomes large, and the thickness of a polyvinyl acetal (B) layer existing at the glass interface becomes thick in a glass adhering shaped article. As a result of strong influence of decreasing the affinity and the compatibility with the thermoplastic elastomer (A), for a reason described later, the elasticity and the mechanical properties of the thermoplastic polymer composition decrease and also it becomes difficult to obtain sufficient adhesion strength to a glass.

The degree of acetalization (mol%) of the polyvinyl acetal (B) can be defined by the following expression.

$$\text{Degree of Acetalization (mol\%)} = \{k_{(1)} + k_{(2)} + ... + k_{(n)}\}\times 2/\{\{k_{(1)} + k_{(2)} + ... + k_{(n)}\}\times 2 + 1 + m\}\times 100$$

The degree of acetalization of the polyvinyl acetal (B) can be obtained in conformity with a method described in JIS K6728 (1977). That is, a mass proportion ($l_0$) of vinyl alcohol units and a mass proportion ($m_{o0}$) of vinyl acetate units are obtained by titration, and a mass proportion ($k_0$) of vinyl acetal units is obtained by $k_0 = 1 - l_0 - m_o$. From this, a molar proportion l of vinyl alcohol units ($l = (l_0/44.1)/(l_0/44.1 + m_0/86.1 + k_0/Mw(acetal))$) and a molar proportion m of vinyl acetate units ($m = (m_0/86.1)/(l_0/44.1+m_0/86.1+k_0/Mw(acetal))$) are calculated, and from a calculation expression of k = 1 - 1 - m, a molar proportion ($k = k_{(1)} + k_{(2)} + ... + k_{(n)}$) of vinyl acetal units is obtained. Here, Mw(acetal) is a molecular weight per vinyl acetal unit, and in a case of polyvinyl butyral for example, it is Mw(acetal) = Mw(butyral) = 142.2. A degree of acetalization (mol%) can be obtained by $\{k_{(1)} + k_{(2)} + ... + k_{(n)}\}\times 2/\{\{k_{(1)} + k_{(2)} + ... + k_{(n)}\}\times 2 + 1 + m\}\times 100$. A degree of acetalization of the polyvinyl acetal (B) may also be calculated by dissolving the polyvinyl acetal (B) in an appropriate deuterated solvent, such as deuterated dimethyl sulfoxide, and measuring $^1$H-NMR and $^{13}$C-NMR.

Preferred polyvinyl acetal (B) normally contains from 17 to 45 mol% ($0.17 \leq 1 \leq 0.45$) of vinyl alcohol units, and normally contains not less than 0 mol% and not more than 5 mol% ($0 \leq m \leq 0.05$) of vinyl acetate units and preferably not less than 0 mol% and not more than 3 mol% ($0 \leq m \leq 0.03$).

The reaction (acetalization reaction) of polyvinyl alcohol and aldehyde can be carried out by a known method. For example, it may include an aqueous medium method in which aldehyde and an polyvinyl alcohol in aqueous solution are acetalized in the presence of an acid catalyst to precipitate resin particles and a solvent method in which polyvinyl alcohol is dispersed in an organic solvent and acetalized with aldehyde in the presence of an acid catalyst, then this reaction solution is added to water or the like, which is a poor solvent relative to the polyvinyl acetal (B), to precipitate the polyvinyl acetal (B).

The acid catalyst is not particularly limited and may include, for example, organic acids, such as acetic acid and p-toluenesulfonic acid; inorganic acids, such as nitric acid, sulfuric acid, and hydrochloric acid; gases, such as carbon dioxide, exhibiting aciditiy when put into an aqueous solution, solid acid catalysts, such as a cation exchanger and a metal oxide.

Slurry generated in an aqueous medium method, a solvent method, or the like normally exhibits aciditiy due to the acid catalyst. A method of removing the acid catalyst may include a method of repeating washing with water to adjust the pH normally at from 5 to 9, preferably from 6 to 9, and even more preferably from 6 to 8, a method of adding a neutralizer to the slurry to adjust the pH normally at from 5 to 9, preferably from 6 to 9, and even more preferably from 6 to 8; and a method of adding alkylene oxides. A compound used to remove such an acid catalyst may include, for example, alkali metal compounds, such as sodium hydroxide, potassium hydroxide, sodium acetate, sodium carbonate, sodium hydrogen carbonate, and potassium carbonate, ammonia, and an aqueous ammonia solution; alkylene oxides may include ethylene oxide and propylene oxide; and glycidyl ethers, such as ethylene glycol diglycidyl ether.

Subsequently, salts generated by the neutralization, reaction residues of aldehyde, and the like are removed. A method of removing is not particularly limited, and a method of repeating dewatering and washing with water, for

example, is used normally. The polyvinyl acetal (B) in a water containing from which the residues and the like are removed are dried as needed and is processed into powders, granules, or pellets as needed. When processed into powders, granules, or pellets, the polyvinyl acetal (B) of the present invention is preferably degassed in a reduced pressure, thereby reducing the reaction residues of aldehyde, the moisture, and the like.

The thermoplastic polymer composition of the present invention preferably contains from 0.1 to 100 parts by mass of the polyvinyl acetal (B) in terms of 100 parts by mass of the thermoplastic elastomer (A). When the polyvinyl acetal (B) is less than 0.1 parts by mass, it is difficult to obtain sufficient adhesion to a glass. It is more preferably 1 part by mass or more, and even more preferably 5 parts by mass or more. On the other hand, when the polyvinyl acetal (B) is more than 100 parts by mass, although sufficient adhesion is obtained, the thermoplastic polymer composition becomes hard and it becomes difficult to obtain good flexibility, elasticity, and mechanical properties. It is more preferably 70 parts by mass or less. When the polyvinyl acetal (B) is too much in particular, the thermoplastic elastomer (A) turns out not to form a matrix and the flexibility, the elasticity, and the mechanical properties are seriously decreased.

The thermoplastic polymer composition of the present invention has the morphology in which particles of the polyvinyl acetal (B) are dispersed in the matrix of the thermoplastic elastomer (A). As the thermoplastic elastomer (A) forms a matrix, it becomes possible to obtain good flexibility, elasticity, and mechanical properties. At this time, the polyvinyl acetal (B) is preferably dispersed with an average particle diameter of 5 μm or less from the perspectives of obtaining better mechanical properties and improving the adhesion to a glass. The polyvinyl acetal (B) more preferably has an average particle diameter of 3 μm or less, and even more preferably 1 μm or less.

Although detailed reasons are not clear, as the compatibility of the thermoplastic elastomer (A) and the polyvinyl acetal (B) becomes better, the dispersed particle diameter of the polyvinyl acetal (B) becomes smaller and the adhesion at the interface between both phases also becomes strong. As a result, it is considered that defects and fractures at the interface due to deformation become difficult to be generated and the mechanical properties (breaking strength, elongation, and the like) are improved. As described later, since a continuous layer of the polyvinyl acetal (B) exists at the interface between the thermoplastic polymer composition of the present invention and a ceramic or a metal, the adhesion strength of the thermoplastic polymer composition and a ceramic or a metal is estimated to become high. However, even in such a case, when the compatibility of the thermoplastic elastomer (A) and the polyvinyl acetal (B) is decreased, fractures (material fractures) inside the thermoplastic polymer composition or separation between the continuous layer and a core portion is generated, so that the adhesion strength of the thermoplastic polymer composition and a ceramic or a metal is considered to be decreased.

From these perspectives, it is important to improve the compatibility of the thermoplastic elastomer (A) and the polyvinyl acetal (B). Accordingly, the thermoplastic elastomer (A) is preferably a thermoplastic elastomer (A2) containing a polar functional group. In this case, the polar functional group may be in side chain of a polymer block constituting the thermoplastic elastomer (A2), may also be at an end thereof, and may also be contained in main chain. The polar functional group may include monovalent substituent groups, such as hydroxyl group, carboxyl group, carboxylic acid anhydride, boronic acid group, epoxy group, amino group, aldehyde group, amide group, amidine group, nitrile group, thiol group, imino group, and sulfonic acid group; and polyvalent substituent groups, such as ester group, urethane group, amide group, ether group, carbonyl group, urea group, carbonic acid group, and acetal group. In a case of a polyvalent substituent group, it is also possible to form polymer chain using it as bonded species. These polar functional groups may be in one type or may also be in a plurality of types. In addition, the thermoplastic elastomer (A2) may also have only one polymer block containing the polar functional group or may also have a plurality of polymer blocks containing the polar functional group.

Although not particularly limited, the thermoplastic elastomer (A2) having a polar functional group in side chain may include, for example, a product of a block copolymer having an aromatic vinyl polymer block and a conjugated diene polymer block or a partial hydrogenation product thereof that is grafted by an unsaturated carboxylic acid monomer in a known method in a state of solution or bulk and has carboxylic acid or acid anhydride group introduced into molecular chain thereof. The unsaturated carboxylic acid monomer used here may include, for example, maleic anhydride and maleic acid or a half ester compound thereof, itaconic anhydride and itaconic acid or a half ester compound thereof, crotonic acid, isocrotonic acid, and citraconic anhydride. Other than those, the thermoplastic elastomer (A2) having a polar functional group in side chain may also include modified block copolymers having epoxy group, hydroxyl group, or boronic acid introduced therein.

In addition, although not particularly limited, the thermoplastic elastomer (A2) having a polar functional group at least one of the ends of molecular chain may include, for example, a block copolymer having an aromatic vinyl polymer block and a conjugated diene polymer block that have hydroxyl group at an end or a hydrogenation product thereof. Such a block copolymer having hydroxyl group at an end can be created in a conventionally known method, and can be produced by, for example, forming molecular chain of the block copolymers in ionic polymerization methods, such as anionic polymerization and cationic polymerization, single site polymerization methods, living radical methods, and the like, followed by adding hydroxyl group at an end of the molecular chain. For example, in a case of an anionic polymerization method, an aromatic vinyl compound and a conjugated diene compound are sequentially polymerized

in an inert organic solvent, such as n-hexane and cyclohexane, using an alkaline lithium compound or the like as a polymerization initiator, and when reaching desired molecular structure and molecular weight, they are added with a compound having oxirane skeleton, such as ethylene oxide, propylene oxide, and styrene oxide; a lactone-based compound, such as ε-caprolactone, β-propiolactone, and dimethylpropiolactone (pivalolactone); or the like, and subsequently they are added with an active hydrogen compound, such as alcohols, carboxylic acids, and water, to stop the polymerization, thereby being capable of producing a block copolymer having hydroxyl group at one end. A block copolymer thus obtained may be hydrogenated as needed. In a case of using dithiopolybutadiene, which is a bifunctional initiator, as a polymerization initiator, for example, it is possible to produce a block copolymer having hydroxyl group at both ends. The block copolymer having hydroxyl group at one end includes, considering a case of an incomplete reaction rate of a reaction to introduce hydroxyl group into an end, those having an average content of terminal hydroxyl group of 0.5 or more per molecule. The average content of terminal hydroxyl group is more preferably 0.7 or more per molecule.

Another thermoplastic elastomer (A2) having a polar functional group at at least one end of molecular chain may also include a modified block copolymer having carboxylic acid, acid anhydride, epoxy group, or boronic acid introduced into an end thereof. Among them, a block copolymer having carboxylic acid at an end can be produced, for example, by producing a block copolymer in the above known method according to an anionic polymerization method, followed by adding carbon dioxide and further adding an active hydrogen compound to stop polymerization. In a case of having a polar functional group at an end, the polar functional group preferably has an average content of 0.5 or more per molecule of the block polymer, and more preferably 0.7 or more per molecule.

Further, although not particularly limited, the thermoplastic elastomer (A2) having a grafted polymer block containing a polar functional group may include, for example, graft copolymers having a polycondensed polymer block, such as those polyester based, polyamide based, polyurethane based, polycarbonate based, polyurea based, and polyacetal based; an addition polymerized polymer block such as a vinyl-based polymer block, such as polyvinyl alcohol, those polyvinyl acetal based, ethylene-vinyl alcohol copolymers, propylene-vinyl alcohol copolymers, polyvinyl acetate, ethylene-vinyl acetate copolymers, propylene-vinyl alcohol copolymers, polyhydroxystyrene, sulfonated polystyrene, and polyvinylpyridine;such as an acrylic polymer block, such as polymethyl (meth)acrylate, polyethyl (meth)acrylate, polypropyl (meth)acrylate, polyisopropyl (meth)acrylate, poly-n-butyl (meth)acrylate, poly-sec-butyl (meth)acrylate, poly-tert-butyl (meth)acrylate, polypentyl (meth)acrylate, polyhexyl (meth)acrylate, polyoctyl (meth)acrylate, poly-2-ethylhexyl (meth)acrylate, polydodecyl (meth)acrylate, polymyristyl (meth)acrylate, polypalmityl (meth)acrylate, polystearyl (meth) acrylate, polybehenyl (meth)acrylate, polycyclohexyl (meth)acrylate, polyphenyl (meth)acrylate, polyhydroxymethyl (meth)acrylate, polyhydroxyethyl (meth)acrylate, polyhydroxyethoxyethyl (meth)acrylate, and poly(meth)acrylic acid, and a copolymer of two or more types of acrylic monomers; such as polyketone and polyethylene oxide; grafted in side chain of the thermoplastic elastomer (A2).

In addition, although not particularly limited, the thermoplastic elastomer (A2) contained in main chain of a polymer block containing a polar functional group may include a block copolymer containing a polycondensed polymer block, such as those polyester based, polyamide based, polyurethane based, polycarbonate based, polyurea based, and polyacetal based; an addition polymerized polymer block such as a vinyl-based polymer block, such as polyvinyl alcohol, those polyvinyl acetal based, ethylene-vinyl alcohol copolymers, propylene-vinyl alcohol copolymers, polyvinyl acetate, ethylene-vinyl acetate copolymers, propylene-vinyl alcohol copolymers, polyhydroxystyrene, sulfonated polystyrene, and polyvinylpyridine; such as an acrylic polymer block, such as polymethyl (meth)acrylate, polyethyl (meth) acrylate, polypropyl (meth)acrylate, polyisopropyl (meth)acrylate, poly-n-butyl (meth)acrylate, poly-sec-butyl (meth)acrylate, poly-tert-butyl (meth)acrylate, polypentyl (meth)acrylate, polyhexyl (meth)acrylate, polyoctyl (meth)acrylate, poly-2-ethylhexyl (meth)acrylate, polydodecyl (meth)acrylate, polymyristyl (meth)acrylate, polypalmityl (meth)acrylate, polystearyl (meth)acrylate, polybehenyl (meth)acrylate, polycyclohexyl (meth)acrylate, polyphenyl (meth)acrylate, polyhydroxymethyl (meth)acrylate, polyhydroxyethyl (meth)acrylate, polyhydroxyethoxyethyl (meth)acrylate, and poly(meth) acrylic acid, and a copolymer of two or more types of acrylic monomers; in main chain.

Among them, from the perspective of the compatibility with the polyvinyl acetal (B), it is preferred to use a block copolymer containing a polyurethane-based block as the thermoplastic elastomer (A2). Here, the block copolymer containing a polyurethane-based block is a block.copolymer having a polyurethane-based block in addition to the aromatic vinyl polymer block and the conjugated diene polymer block. Here, from the aspects of better mechanical properties and adhesion of the thermoplastic polymer composition, a number average molecular weight thereof is preferably within a range of from 500 to 500000, and more preferably within a range of from 2000 to 200000.

Although the block copolymer containing a polyurethane-based block may be a block copolymer having one addition polymerized block and one polyurethane-based block or also be a block copolymer in which addition polymerized blocks and polyurethane-based blocks are bonded three, four, or more in total, it is preferably a block copolymer having one addition polymerized block and one polyurethane-based block from the aspects of mechanical properties, adhesion, and formability of a thermoplastic polymer composition obtained therefrom. Here, the thermoplastic elastomer (A2) of the present invention contains an aromatic vinyl polymer block and a conjugated diene polymer block in one addition polymerized block.

Although not particularly limited, the block copolymer containing a polyurethane-based block can be obtained by, for example, reacting a thermoplastic polyurethane elastomer and an addition-polymerized block copolymer and/or a hydrogenation product thereof (hereinafter, referred to as "end modified addition polymerized block copolymer") by kneading under a molten state. The addition-polymerized block copolymer has an aromatic vinyl polymer block and a conjugated diene polymer block, and also has a functional group, preferably hydroxyl group, at the end. From a reaction product thus obtained, an intended block copolymer is extracted and recovered in a known method. As the end modified addition polymerized block copolymer, the above-described thermoplastic block copolymer having hydroxyl group at least at one end is preferably used. The thermoplastic polyurethane elastomer and the end modified addition polymerized block copolymer can be melt kneaded using a known melt-mixing device, such as a single-screw extruder, a twin-screw extruder, a kneader, and a Banbury mixer. The melt kneading conditions can be selected depending on the type of the thermoplastic polyurethane elastomer and the end modified addition polymerized block copolymer in use, the type of the device, and the like, and it may generally be carried out at a temperature of from 180°C to 250°C for approximately from 1 to 15 minutes.

In addition, the block copolymer containing a polyurethane-based block can also be obtained by, other than the above method, extracting and recovering an intended block copolymer in a known method from a reaction product obtained by, at the start of reaction or during the reaction when producing a thermoplastic polyurethane elastomer by reacting polymeric diol, organic diisocyanate, and a chain extender in an extruder or the like, for example, adding the end modified addition polymerized block copolymer to a reaction system thereof for reaction.

The end modified addition polymerized block copolymer used for production of a block copolymer containing a polyurethane-based block often contains an addition polymerized block copolymer without a functional group at an end and/or a hydrogenation product thereof (hereinafter, referred to as "end unmodified addition polymerized block copolymer") derived from the production method described above. Therefore, the reaction product obtained by the reaction of the thermoplastic polyurethane elastomer and the end modified addition polymerized block copolymer is often a mixture of four, which are a block copolymer containing a polyurethane-based block, an unreacted thermoplastic polyurethane elastomer, the end unmodified addition polymerized block copolymer, and the end modified addition polymerized block copolymer.

In the thermoplastic polymer composition of the present invention, it is also possible to form the above reaction product by reacting the thermoplastic polyurethane elastomer and the end modified addition polymerized block copolymer to use the reaction product directly as a block copolymer containing a polyurethane-based block. That is, it may also be used directly in the form of a reaction product without extracting and recovering from the reaction product.

The thermoplastic elastomer (A) used for the thermoplastic polymer composition of the present invention may be the thermoplastic elastomer (A1) not containing a polar functional group, may also be the thermoplastic elastomer (A2) containing a polar functional group, and may also be these used together. As described above, since the thermoplastic elastomer (A2) containing a polar functional group has good compatibility with the polyvinyl acetal (B), the thermoplastic polymer composition can have a smaller dispersion particle diameter of the polyvinyl acetal (B), is excellent in the mechanical performance, and is also excellent in adhesion to a glass.

However, since the thermoplastic elastomer (A2) containing a polar functional group is generally more expensive than the thermoplastic elastomer (A1) not containing a polar functional group, it is preferred to use the thermoplastic elastomer (A1) not containing a polar functional group depending on applications. From the balance of the costs and the performance, it is preferred to use the thermoplastic elastomer (A1) not containing a polar functional group and the thermoplastic elastomer (A2) containing a polar functional group together. The ratio by weight (A2/A1) of the thermoplastic elastomer (A1) and the thermoplastic elastomer (A2) in this case is preferably from 0.1/100 to 100/0.1. The ratio by weight (A2/A1) is more preferably 1/100 or more, and even more preferably 5/100 or more. The ratio by weight (A2/A1) is also preferably 100/1 or less, and even more preferably 100/5 or less. In this case, while suppressing a rise in costs, it is possible to improve the mechanical properties of the thermoplastic polymer composition and also improve the adhesion to a glass. This is considered because the thermoplastic elastomer (A2) containing a polar functional group functions as a compatibilizing agent for the thermoplastic elastomer (A1) not containing a polar functional group and the polyvinyl acetal (B). From the demands in costs, the thermoplastic elastomer (A1) not containing a polar functional group is preferably contained as a main component, and in that case, the ratio by weight (A2/A1) is preferably 100/100 or less, more preferably 70/100 or less, and even more preferably 50/100 or less.

The thermoplastic elastomer (A1) not containing a polar functional group and the thermoplastic elastomer (A2) containing a polar functional group explained may be used singly or may also be used a plurality in combination, respectively.

The thermoplastic polymer composition of the present invention may also contain a softener for rubber as needed for the purpose of imparting formability and flexibility and the like in addition to the thermoplastic elastomer (A) and the polyvinyl acetal (B). Such a softener may include, for example, a mineral oil-based softener for rubber called process oil or extender oil. This is a mixture of three, which are aromatic ring, naphthene ring, and paraffin, and those with paraffin chain having a carbon number of 50 mass% or more in terms of the total carbon number are called as

paraffin based, those with naphthene ring having a carbon number of from 30 to 45 mass% as naphthene based, and those having an aromatic carbon number of more than 30% as aromatic based. Normally, such a softener for rubber is blended from 5 to 500 parts by mass in terms of 100 parts by mass of the thermoplastic elastomer (A).

The thermoplastic polymer composition of the present invention may also contain another thermoplastic polymer, such as olefin-based polymer, styrene-based polymer, polyphenylene ether-based resin, and polyethylene glycol, as needed to the extent not inhibiting the effects of the present invention. Among them, it is known that the thermoplastic polymer composition of the present invention generally further improves in the workability and the mechanical properties when containing an olefin-based polymer. As such an olefin-based polymer, one or two or more types of block copolymers and random copolymers of, for example, polyethylene, polypropylene, polybutene, or propylene with another $\alpha$-olefin, such as ethylene or 1-butene, can be used. Such another thermoplastic polymer is preferably contained 100 parts by mass or less in terms of 100 parts by mass of the thermoplastic elastomer (A), and more preferably 50 parts by mass or less.

Further, the thermoplastic polymer composition of the present invention may also contain a plasticizer as needed that is conventionally used for the polyvinyl acetal (B) or known. Although not particularly limited, such a plasticizer may include, for example, organic acid ester-based plasticizers, such as monobasic organic acid ester and polybasic organic acid ester, and phosphoric acid plasticizers, such as those organic phosphoric acid based and organic phosphorous acid based. Such a monobasic organic acid ester plasticizer may include, for example, glycol-based esters obtained by a reaction of glycol, such as triethylene glycol, tetraethylene glycol or tripropylene glycol, and monobasic organic acid, such as butyric acid, isobutyric acid, capric acid, 2-ethylbutyric acid, heptylic acid, n-octylic acid, 2-ethylhexylic acid, pelargonic acid (n-nonylic acid) or decylic acid, as represented by triethylene glycol-dicaproate ester, triethylene glycol-di-2-ethylbutyric acid ester, triethylene glycol-di-n-octylic acid ester, triethylene glycol-di-2-ethylhexylic acid ester, and the like. Such a polybasic organic acid ester plasticizer is not particularly limited, and may include, for example, esters of polybasic organic acid, such as adipic acid, sebacic acid, and azelaic acid, and linear or branched alcohol as represented by dibutyl sebacic acid ester, dioctyl azelaic acid ester, dibutyl carbitol adipic acid ester, and the like. Such an organic phosphoric acid-based plasticizer is not particularly limited, and may include, for example, tributoxyethyl phosphate, isodecyl phenyl phosphate, triisopropyl phosphate, and the like. The plasticizer may be used one type singly or two or more types may also be used together. The plasticizer is preferably contained 100 parts by mass or less in terms of 100 parts by mass of the thermoplastic elastomer (A), more preferably 55 parts by mass or less, and even more preferably 40 parts by mass or less.

The thermoplastic polymer composition of the present invention can further contain an inorganic filler as needed. The inorganic filler is useful for the thermoplastic polymer composition of the present invention in improvement in the physical properties, such as the heat resistance and the weather resistance, improvement in economics as an extender, adjustment of hardness, and the like. Although such an inorganic filler is not particularly limited, one or two or more types of, for example, calcium carbonate, talc, magnesium hydroxide, aluminum hydroxide, mica, clay, natural silicic acid, synthetic silicic acid, titanium oxide, carbon black, barium sulfate, and the like can be used. In a case of containing such an inorganic filler, it is preferably blended within a range of not impairing the flexibility of the thermoplastic polymer composition, and it is generally preferred to be 100 parts by mass or less in terms of 100 parts by mass of the thermoplastic elastomer (A).

In addition, other than the components above, the thermoplastic polymer composition of the present invention may also contain one or two or more types of other components, such as compatibilizing agents, lubricants, light stabilizers, weather resistant agents, processing aids, colorants, such as pigments and dyes, flame retardants, antistatic agents, softeners, plasticizers, delustering agents, fillers, silicon oils, antiblocking agents, ultraviolet absorbers, antioxidants, mold release agents, forming agents, and fragrances, as needed within a range of not inhibiting the effects of the present invention.

A method of producing the thermoplastic polymer composition of the present invention is not particularly limited, and the thermoplastic polymer composition of the present invention may be produced in any method as long as the method can mix the above components used therein uniformly, and normally a melt kneading method is used. The melt kneading can be carried out using, for example, a melt kneader, such as a single-screw extruder, a twin-screw extruder, a kneader, a batch mixer, a roller, and a Banbury mixer, and normally the thermoplastic polymer composition of the present invention can be obtained by melt kneading at a temperature of from 170°C to 270°C.

The thermoplastic polymer composition of the present invention thus obtained preferably has JIS-A hardness (may be referred to as "A hardness") according to JIS K6253 of 93 or less. As the hardness becomes excessively high, it becomes difficult to obtain good flexibility, elasticity, and mechanical properties and it is prone to be difficult for preferred use as a thermoplastic elastomer composition having excellent adhesion to a ceramic or a metal. Here, the hardness of the thermoplastic polymer composition is a value measured by, for example, stacking sheets formed from this resin to make the thickness of 6 mm with a type A durometer according to JIS K6253. The A hardness is preferably 85 or less, and even more preferably 75 or less.

Since the thermoplastic polymer composition of the present invention is thermally meltable and excellent in forming workability, it is possible to produce a variety of shaped articles, sheets, and films. As a forming method at that

point, various forming methods can be used that are generally used for thermoplastic polymers, and an optional forming method, such as injection molding, extrusion molding, press molding, blow molding, calendar molding, and cast molding, can be employed, for example. It is also possible to employ T die methods, calendar methods, inflation methods, belt methods, and the like that are generally used for forming a sheet.

A preferred embodiment of a shaped article of the thermoplastic polymer composition of the present invention is a shaped article in which the thermoplastic polymer composition is adhered to a ceramic or a metal. Since the thermoplastic polymer composition of the present invention is excellent in flexibility, mechanical properties, and formability and also excellent in adhesion to a ceramic or a metal, it is suitable for such an application.

The ceramic used for the shaped article of the present invention means a nonmetal inorganic material, and it may include metal oxides, metal carbides, and metal nitrides. It may include, for example, glass, cements,' alumina, zirconia, zinc oxide-based ceramics, barium titanate, PZT, silicon carbide, silicon nitride, and ferrites. Among these ceramics, glass is used particularly preferably.

The metal used for the shaped article of the present invention may be one attached to the thermoplastic polymer composition of the present invention and is not particularly limited. It may include, for example, iron, copper, aluminum, magnesium, nickel, chrome, zinc, and an alloy containing them as a component. It may also be a shaped article having a metal surface formed by plating, such as copper plating, nickel plating, and chrome plating.

A method of producing a shaped article in which the thermoplastic polymer composition is adhered to a ceramic or a metal is not particularly limited, and may be carried out by employing any method as long as being a method of producing an adhered structure by melt adhesion, and for example, may include forming methods, such as injection molding methods, extrusion molding methods, press molding methods and melt casting methods. For example, in a case of producing by injection molding, a method is employed in which a glass plate formed in a predetermined shape and dimensions in advance is arranged in a mold, and the thermoplastic polymer composition of the present invention is injection molded over there to produce an adhered shaped article. In a case of producing an adhered shaped article by extrusion molding, it is also possible to produce an adhered shaped article by directly extruding a thermoplastic polymer composition in a molten state, extruded from a die having a predetermined shape mounted in an extruder, towards a surface of a glass plate formed in a predetermined shape and dimensions in advance. Further, it is also possible to form a shaped article of the thermoplastic polymer composition of the present invention in advance by an injection molding method or an extrusion molding method and to heat and pressurize the shaped article onto a glass plate formed in a predetermined shape and dimensions in advance using a press molding machine or the like. In this case, a layer of an olefin-based polymer or the like may also be provided in an outermost layer as a protective layer as needed on a surface not to be adhered to the glass.

In the shaped article in which a thermoplastic polymer composition is adhered to a ceramic or a metal, a continuous layer of the polyvinyl acetal (B) preferably exists at an interface between the thermoplastic polymer composition and the ceramic or the metal. This seems to enable to obtain the excellent adhesion between the thermoplastic polymer composition and the ceramic or the metal. Here, the "continuous layer of the polyvinyl acetal (B)" means a "layer consisting of the polyvinyl acetal (B)" or a "layer having the polyvinyl acetal (B) as a matrix and thermoplastic elastomer (A) particles dispersed therein". As described above, the thermoplastic polymer composition of the present invention preferably has particles of the polyvinyl acetal (B) are dispersed in a matrix of the thermoplastic elastomer (A). Accordingly, near the interface with a ceramic or a metal, the resin constituting the matrix is exchanged. Although the cause of such a phenomenon is not fully clear, the polyvinyl acetal (B) having high affinity for a ceramic or a metal seems to be selectively collected at the interface with the ceramic or the metal. As a result, excellent adhesion seems to be obtained between the thermoplastic polymer composition and the ceramic or the metal. Although a thickness of the continuous layer of the polyvinyl acetal (B) is not particularly limited, it is normally from 0.001 to 10 $\mu$m. Such a continuous layer may not be necessarily formed on the entire plane of the adhered surface between the thermoplastic polymer composition and a ceramic or a metal, and there is a case of existing partially on the adhered surface depending on the forming conditions and the like.

When the thermoplastic polymer composition of the present invention is adhered to a ceramic or a metal, it is also possible to apply a conventionally known adhesive on a ceramic plate or a metal plate in advance in order to enhance the effects of adhesion of the present invention even more. The adhesive may include, for example, an adhesive composition containing maleic anhydride modified polyolefin and an adhesive composition containing chlorinated polyolefin. However, the advantage of using the thermoplastic polymer composition of the present invention is greater in a case that, without using such an adhesive, the thermoplastic polymer composition of the present invention is directly adhered to a ceramic or a metal.

The thermoplastic polymer composition of the present invention is widely applicable as shaped articles attached to various ceramics or metals. A shaped article in which the thermoplastic polymer composition of the present invention is adhered to a ceramic or a metal is not particularly limited in the shape, the structure, the application, and the like, and any of them is included within a scope of the present invention as long as the thermoplastic polymer composition of the present invention is a structure adhered to a ceramic or a metal. It is useful for a wide range of applications as a shaped

article or a structure adhered to glass, such as a window molding and a gasket in an automobile and a building and a glass sealant. It is also possible to be preferably used in an area of a glass attached to an aluminum sash, a metal opening, or the like in a window of an automobile or a building, an area of a glass connected to a metal frame in a solar cell module or the like.

Another preferred embodiment of a shaped article of the thermoplastic polymer composition of the present invention is a shaped article in which the thermoplastic polymer composition is adhered to a polar polymer having a functional group selected from the group consisting of amide group, ester group, carbonate group, acetal group, ether group, sulfide group, nitrile group, hydroxyl group, carbonyl group, carboxyl group, amino group, and sulfonic acid group. Since these functional groups have an interaction with polyvinyl acetal contained in the thermoplastic polymer composition of the present invention, the adhesion to the thermoplastic polymer composition of the present invention is good. Although normally styrene-based thermoplastic elastomers and olefin-based thermoplastic elastomers are often not good in adhesion to polar polymers, the thermoplastic polymer composition of the present invention is excellent in the adhesion to polar polymers for the above reason. The thermoplastic polymer composition of the present invention is also excellent in flexibility, mechanical properties, and formability. Accordingly, the thermoplastic polymer composition of the present invention can be preferably used by being adhered to the above polar polymers.

Preferred examples of such a polar polymer may include polyamide, polyester, polycarbonate, polyacetal, polyphenylene sulfide, ABS resin (acrylonitrile-butadiene-styrene copolymer), polyvinyl alcohol, ethylene-vinyl alcohol copolymer, polyvinyl acetal, polyvinyl acetate, poly(meth)acrylate, polyether, polyketone, ionomer, polyurethane, and polyurea.

A method of producing a shaped article in which the thermoplastic polymer composition of the present invention and the polar polymer are adhered is not particularly limited. It is possible to melt both at the same time for co-extrusion molding or co-injection molding. In addition, a shaped article of one of them that is formed in advance may also be melt coated or solution coated. Besides, it is also possible to employ two-color molding, insert molding, and the like.

The thermoplastic polymer composition of the present invention is also used preferably as an adhesive. As shown in Examples of this application, since the thermoplastic polymer composition of the present invention has good adhesion to ceramics, metals, and polar polymers and also good adhesion to nonpolar polymers, it is preferably used as an adhesive to adhere different materials with each other. Moreover, since it also has flexibility, it also has a buffering effect for difference in thermal expansion coefficients between the different materials and the like.

## Examples

Although a detailed description is given below to the present invention by way of Examples, the present invention is not limited at all by such Examples. The preparation of test specimens in Examples and Comparative Examples and the measurement or the evaluation of each physical property was carried out as below.

### (1) Preparation of Thermoplastic Polymer Composition Sheet

Materials shown in Examples and Comparative Examples below were melt kneaded in the conditions of 230°C and a rotation speed of 100 rpm for 5 minutes using a batch mixer "Labo Plastomill 20R20C" by Toyo Seiki Seisaku-sho, Ltd. The obtained kneaded substance was compression press molded at 230°C under the load of 100 kgf/$cm^2$ for 5 minutes using a compression press molding machine "NF-37" manufactured by SHINTO Metal Industries Corporation with a "Teflon®" coated metal frame as a spacer, thereby obtaining a thermoplastic polymer composition sheet having a thickness of 1 mm.

### (2-1) Preparation of Laminate with Glass Plate

Using a sheet of 50 mm × 25 mm × 1 mm obtained from the sheet prepared in the above (1), the thermoplastic polymer composition sheet was placed by masking with a Teflon® sheet to be adhered only to an area of 25 mm × 25 mm from an end face of a glass plate (76 mm × 25 mm × 2 mm) that was sufficiently cleansed with neutral detergent added water, methanol, acetone, and distilled water in this order and dried in advance. This was sandwiched between metal plates of the compression molding machine and heat treated at 245°C under no load for 5 minutes, thereby obtaining a laminate of the thermoplastic polymer composition sheet adhered to the glass plate.

### (2-2) Preparation of Laminate with Polar Polymer

Using a sheet of 50 mm × 25 mm × 1 mm obtained from the sheet prepared in the above (1), the thermoplastic polymer composition sheet was placed by masking with a Teflon® sheet to be adhered only to an area of 25 mm × 25 mm from an end face of a polar polymer sheet (50 mm × 25 mm × 1 mm). This was sandwiched between metal plates

of the compression molding machine and heat treated at from 200°C to 260°C under no load for 5 minutes, thereby obtaining a laminate of the thermoplastic polymer composition sheet adhered to the polar polymer sheet. For comparison, operations of adhering to nonpolar polymer sheets were also carried out similarly. Here, the heat treatment temperature was varied as below depending on the resin to be adhered to. PET (260°C), PC (260°C), PA6 (220°C), ABS (230°C), POM (200°C), PBT (260°C), PA66 (260°C), and PP (245°C)

(2-3) Preparation of Laminate with Metal Plate

Using a sheet of 50 mm × 25 mm × 1 mm obtained from the sheet prepared in the above (1), the thermoplastic polymer composition sheet was placed by masking with a Teflon® sheet to be adhered only to an area of 25 mm × 25 mm from an end face of a metal plate (50 mm × 25 mm × 1 mm) that was cleansed with methyl ethyl ketone (MEK) for 5 minutes and dried in advance. This was sandwiched between metal plates of the compression molding machine and heat treated at 245°C under no load for 7 minutes, thereby obtaining a laminate of the thermoplastic polymer composition sheet adhered to the glass plate.

(3) Measurement of Hardness

Six sheets of test specimens of 50 mm × 25 mm × 1 mm obtained from the sheet prepared in the above (1) were placed horizontally in stack, and the JIS-A hardness was measured according to JIS K6253 using a durometer "GS-709N (type A)" manufactured by Teclock Corp.

(4) Measurement of Tensile Breaking Strength and Tensile Breaking Elongation

By punching out the sheet prepared in the above (1), a JIS 3 dumbbell test specimens was prepared. Using the dumbbell test specimens, tensile breaking strength and tensile breaking elongation were measured in the condition of 500 mm/min according to JIS K6251 using "Autograph AG-5000B" manufactured by Shimadzu Corporation.

(5) Morphology Observation of Thermoplastic Polymer Composition Sheet

Using the sheet prepared in the above (1), the sheet was cut out so as to make the cutting plane in parallel to the thickness direction using an ultramicrotome "Reichert ULTRACUT-S" manufactured by Leica to prepare an ultrathin section, followed by electron staining with ruthenium tetraoxide vapor. Morphology of the sample thus prepared was observed using a transmission electron microscope "H-800NA" by Hitachi, Ltd. At this point, the polyvinyl acetal (B) and the aromatic vinyl polymer blocks in the thermoplastic elastomer (A) are stained and they appear in black in a micrograph. At this time, the aromatic vinyl polymer blocks all form a microphase separation structure in size of 0.05 μm or less. Using the obtained micrograph, the average particle diameter of the polyvinyl acetal (B) was evaluated in a method below. From the micrograph thus taken, individual particle diameters were measured for each particle of stained polyvinyl acetal (B) having 0.05 μm or more from an average between a long diameter and a short diameter, and a weighted average was calculated according to an expression (1) below from n samples of obtained particle diameters (d) to define the obtained value as an average particle diameter ($d_w$). Here, since the particles of 0.05 μm or less were indistinguishable from the aromatic vinyl polymer blocks of the thermoplastic elastomer (A), they were not subjected to the measurement.

[math 1]

$$d_w = \frac{\sum_i d_i^2 n_i}{\sum_i d_i n_i} \qquad (1)$$

(6) Measurement of Adhesion Strength

The laminates prepared in the above (2-1), (2-2), and (2-3) were subjected to a peel adhesion strength test in the conditions of a peel angle of 180° and a tensile rate of 50 mm/min according to JIS K6854-2 using "autograph AG-5000B" by Shimadzu Corporation to measure the adhesion strength.

(7) Morphology Observation of Glass Adhesion Interface

By putting a razor carefully at the adhesion interface of the laminate prepared in the above (2-1), the sheet and the glass plate were peeled off. Consecutively, from near the surface of the sheet used to be adhered to the glass, in a state of freezing the sample using liquid nitrogen, a cross-section was cut out vertically to the surface using a razor. The morphology of the sample thus prepared was observed using a scanning probe microscope "Probe Station SPI 4000 / Environment Controllable unit E-sweep" manufactured by SII NanoTechnology Inc. The observation was carried out at normal temperature and at normal pressure within a range of a scan size of 5 × 5 μm in a phase mode.

(8) Evaluation of Formability

A case of being able to obtain a sheet by the melt molding method shown in the above (1) was defined as A, and a case of not being able to obtain a sheet was defined as B.

Thermoplastic elastomers (A), polyvinyl acetals (B), a softener for rubber, and a polypropylene resin used as materials for thermoplastic polymer compositions in the Examples and the Comparative Examples below are abbreviated and specified as follows.

[Thermoplastic Elastomer : A1-1]

A hydrogenation product of a triblock copolymer of polystyrene block-butadiene block-polystyrene block (number average molecular weight: 280, 000, styrene content: 33 weight%, hydrogenation ratio in polybutadiene block: 98%, amount of 1,2-bond in polybutadiene block: 38%).

[Thermoplastic Elastomer : A1-2]

A hydrogenation product of a triblock copolymer of polystyrene block-polyisoprene block-polystyrene block (number average molecular weight: 70,000, styrene content: 30 weight%, hydrogenation ratio in polyisoprene block: 98%).

[Thermoplastic Elastomer : A1-3]

A hydrogenation product of a triblock copolymer of polystyrene-poly(isoprene-butadiene) block-polystyrene block (number average molecular weight: 160,000, styrene content: 32 weight%, hydrogenation ratio in poly(isoprene-butadiene) block: 98%).

[Thermoplastic Elastomer : A1-4]

"TR 1600" produced by JSR Corporation. A mixture of a triblock copolymer of polystyrene block-polybutadiene block-polystyrene block and a diblock copolymer of polystyrene block-polybutadiene block (styrene content: 32 weight%, MFR: 19 g/10 min. (200°C, 49N), density: 0.94 g/cm$^3$).

[Thermoplastic Elastomer : A1-5]

An ethylene-octene copolymer "Engage 8200" (melt index: 5 g/min. (190°C, 2.16 kg), density: 0.87 g/cm$^3$) produced by DuPont Dow Elastomers.

[Thermoplastic Elastomer : A1-6]

TPV "Santoprene TPV 101-55" produced by AES (density: 0.97 g/cm$^3$, hardness: 59 (Shore A)).

[Thermoplastic Elastomer : A2-1]

A block copolymer of addition polymerized block and polyurethane-based block obtained by a method below. The addition polymerized block is a hydrogenation product of a triblock copolymer of polystyrene block-polyisoprene block-polystyrene block.

A hundred parts by mass of a hydrogenation product (number average molecular weight: 200, 000, styrene content: 30 weight%, hydrogenation ratio in polyisoprene block: 98%, average hydroxyl group amount: 0.9/molecule) of an addition polymerized triblock copolymer having hydroxyl group at one end of a molecule of polystyrene block-polyisoprene block-polystyrene block and 100 parts by mass of thermoplastic polyurethane ("KURAMIRON U 2000" produced by Kuraray Co., Ltd.: polyester-based polyurethane elastomer having aliphatic polyester as a soft segment) were dry blended and melt kneaded in the conditions of a cylinder temperature of 220°C and a screw rotation speed of 150 rpm using a twin-screw extruder, followed by extrusion and cutting to prepare pellets. Unreacted polyurethane was extracted and removed from the obtained pellets using dimethyl formamide, and subsequently unreacted hydrogenation products of the aromatic triblock copolymer was extracted and removed using cyclohexane. By drying the residual solid content, a block copolymer of an aromatic triblock copolymer and thermoplastic polyurethane block was obtained.

[Polyvinyl Acetal (B)]

To an aqueous solution in which polyvinyl alcohol was dissolved, n-butyl aldehyde and an acid catalyst (hydrochloric acid) were added and stirred for acetalization to precipitate a resin. It was cleansed until the pH = 6 in accordance with a known method, and subsequently was post-treated while being suspended in an alkalified aqueous medium and stirred, and was cleansed until the pH = 7 again and was dried until the volatile content became 0.3%, thereby obtaining respective polyvinyl acetals (B: polyvinyl butyral) shown in Table 1. In the Table, the molar proportion of each repeating unit signifies a molar proportion in terms of vinyl alcohol units, and the acetal unit (mol%) in the Table corresponds to the degree of acetalization (mol%).

[Table 1]

| | Repeating Unit (mol%)* | | | Average Degree of Polymerization of Material PVA | Degree of Saponification (mol%) |
|---|---|---|---|---|---|
| | Acetal Unit | Vinyl Alcohol Unit | Vinyl Acetate Unit | | |
| B-1 | 72 | 27 | 1 | 1,750 | 99 |
| B-2 | 80 | 18 | 2 | 1,000 | 99 |
| B-3 | 72 | 26 | 2 | 1,000 | 98 |
| B-4 | 63 | 35 | 2 | 1,000 | 99 |
| B-5 | 72 | 25 | 3 | 500 | 99 |
| * Molar Proportion in Terms of Vinyl Alcohol Unit | | | | | |

[Softener for Rubber]

Paraffin-based process oil "Diana Process PW-90" produced by Idemitsu Kosan Co., Ltd.

[Polypropylene]

Polypropylene "Novatec PP MA3" produced by Japan Polychem Corporation.

[Plasticizer]

Triethylene glycol-2-ethylhexylic acid ester

In addition, the following resins and metals were used to be adhered to the thermoplastic polymer composition of the present invention.

[PET]

Polyethylene terephthalate "Bottle TR-8550" produced by Teijin Limited

[PC]

Polycarbonate "Panlite I-1225" produced by Teijin Limited

[PA6]

Polyamide "UBE nylon 1013B" produced by Ube Industries, Ltd.

[ABS]

ABS "CYCOLAC EX-111" produced by Ube Cycon, Ltd.

[POM]

Polyoxymethylene "DURACON M90-44" produced by Polyplastics Co., Ltd.

[PBT]

Polybutylene terephthalate "Toraycon 1041" produced by Toray Industries, Inc.

[PA66]

Polyamide "Leona 1300G" produced by Asahi Kasei Corporation.

[PP]

Polypropylene "Novatec PP MA3" produced by Japan Polychem Corporation.

[Aluminum]

"A1050P"

[Magnesium Alloy]

"AZ91D"

Example 1

Using 100 parts by mass of the thermoplastic elastomer (A1-1), 30 parts by mass of the polyvinyl acetal (B-3), and 100 parts by mass of the softener for rubber, a thermoplastic polymer composition sheet was prepared according to the method of preparing a test specimen described in the above (1) and a laminate was prepared according to the method of preparing a test specimen described in the above (2). Using these test specimens, according to the methods described in the above (3) through (7), hardness, tensile breaking strength, tensile breaking elongation, and adhesion strength were measured, and morphology at the adhesion interface of the glass and the thermoplastic polymer composition sheet was observed, and an average particle diameter of the polyvinyl acetal (B) and a thickness of the continuous layer of the polyvinyl acetal (B) was measured. Results of them are put together and shown in Table 2. An electron micrograph of the observed morphology of the thermoplastic polymer composition sheet is shown in Fig. 1. Particles in black in Fig. 1 are equivalent to polyvinyl acetal (B-3) particles. It is found that the polyvinyl acetal (B-3) particles are finely dispersed in the thermoplastic polymer composition sheet. In addition, a scanning probe micrograph of the observed morphology on the glass adhesion interface is shown in Fig. 5. The left side in Fig. 5 is the thermoplastic resin composition and the right side is the area in which the glass existed before peeling off, and a continuous layer of the polyvinyl acetal (B) was observed between them.

Examples 2 through 12

Thermoplastic polymer sheets and laminates were prepared in a method same as that of Example 1 other than modifying the type and the blended amount of the thermoplastic elastomer (A), the type and the blended amount of the polyvinyl acetal (B), and the blended amount of the softener for rubber in Example 1 into the description in Table 2 for evaluation. In Examples 2 through 5, 7, and 8, the average particle diameter of the polyvinyl acetal (B) was measured. In Examples 4, 5, and 8, the thickness of the continuous layer of the polyvinyl acetal (B) was measured. Results of them are put together and shown in Table 2. In addition, electron micrographs of the observed morphology of the thermoplastic polymer composition sheets are shown in Figs. 2 through 4, and scanning probe micrographs of the observed morphology

on the glass adhesion interfaces are shown in Figs. 6 through 8, respectively.

Comparative Example 1

A thermoplastic polymer composition sheet was attempted for preparation in a method same as that of Example 1 other than not using the polyvinyl acetal (B-3) in Example 1. However, due to a formation failure, it was not possible to obtain a sheet capable of evaluation.

Comparative Example 2

A thermoplastic polymer composition sheet and a laminate were prepared in a method same as Example 1 other than blending 50 parts by mass of polypropylene in stead of the polyvinyl acetal (B-3) in Example 1 for evaluation. Results of them are shown in Table 2. Although the formability was improved by using polypropylene compared with Comparative Example 1, the obtained sheet was almost not adhered to the glass. In addition, when observing the morphology on the glass adhesion interface, the thermoplastic elastomer (A1-1) formed a matrix even in the area attached to the glass and no continuous layer of the polyvinyl acetal (B-3) was confirmed (described as "ND" in Table 2).

Comparative Example 3

A thermoplastic polymer composition sheet and a laminate were prepared in a method same as that of Example 8 other than not using the polyvinyl acetal (B-2) in Example 8 for evaluation. Results of them are shown in Table 2. The adhesion strength between the sheet and the glass was low. In addition, when observing the morphology on the glass adhesion interface, the thermoplastic elastomer (A1-1 and A-3) formed a matrix even in the area attached to the glass and no continuous layer of the polyvinyl acetal (B-3) was confirmed (described as "ND" in Table 2).

Comparative Example 4

A thermoplastic polymer composition sheet and a laminate were prepared in a method same as that of Example 1, not using the thermoplastic elastomer (A1-1) and the softener for rubber in Example 1 and only using the polyvinyl acetal (B-3) for evaluation. Results of them are shown in Table 2. Although the obtained thermoplastic polymer composition sheet exhibited high glass adhesion, the hardness was high and the tensile breaking elongation was small and the flexibility was insufficient.

Comparative Example 5

A thermoplastic polymer composition sheet and a laminate were prepared in a method same as that of Example 1, not using the thermoplastic elastomer (A1-1) and the softener for rubber in Example 1 and adding 30 parts by mass of triethylene glycol-di-2-ethylhexylic acid ester as a plasticizer in terms of 100 parts by mass of the polyvinyl acetal (B-1) for evaluation. Results of them are shown in Table 2. Although the obtained thermoplastic polymer composition sheet exhibited high glass adhesion, the tensile breaking elongation was small and the flexibility was insufficient.

[Table 2]

| | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|
| Thermoplastic Elastomer (A) (parts by mass) | | | | | | | | | | | | | | | | | |
| A1-1 | 100 | 100 | 100 | 100 | 100 | 100 | 100 | 100 | 100 | 100 | 50 | 100 | 100 | 100 | 100 | | |
| A1-2 | | | | | | | | | | | 50 | | | | | | |
| A2-1 | | | | | | | | 30 | 30 | 45 | | | | | 30 | | |
| Polyvinyl Acetal (B) (parts by mass) | | | | | | | | | | | | | | | | | |
| B-1 | | | | | | 50 | | | | | | | | | | | |
| B-2 | | | | 30 | | | | 30 | 30 | 30 | | | | | | | |
| B-3 | 30 | 50 | 100 | | | | | | | | 50 | 200 | | | | 100 | 100 |
| B-4 | | | | | 30 | | | | | | | | | | | | |
| B-5 | | | | | | | 50 | | | | | | | | | | |
| Softener for Rubber (parts by mass) | 100 | 100 | 100 | 100 | 100 | 100 | 100 | 100 | 85 | 85 | | 100 | 100 | 100 | 100 | | |
| Polypropylene (parts by mass) | | | | | | | | | | | | | | 50 | | | |
| Plasticizer (parts by mass) | | | | | | | | | | | | | | | | | 30 |
| Hardness [JIS A] | 21 | 43 | 78 | 24 | 20 | 44 | 41 | 37 | 47 | 51 | 92 | 96 | | 70 | 22 | >98 | 80 |
| Tensile Breaking Strength (MPa) | 4.4 | 6.5 | 3 | 5.8 | 4 | 5.5 | 7 | 7.0 | 7.8 | 6.3 | 10.1 | 8.4 | | 18.7 | 2.3 | 63 | 29 |
| Tensile Breaking Elongation (%) | 1250 | 1090 | 250 | 1150 | 1200 | 1070 | 1070 | 1125 | 1100 | 1025 | 400 | 50 | | 1050 | 1050 | 84 | 140 |
| Adhesion Strength (N/25 mm) | 18.3 | 14.4 | 14.3 | 23 | 10 | 12 | 8.4 | 30 | 40 | 50 | 20.6 | 13.3 | | 0.5 | 1.3 | >160 | >160 |
| Formability | A | A | A | A | A | A | A | A | A | A | A | A | B | A | A | A | A |
| Average Particle Diameter of Polyvinyl Acetal (B) (μm) | 0.86 | 0.98 | 1.45 | 0.53 | 1.28 | | 1.02 | 0.32 | | | | >10 | | | | | |
| Continuous Layer Thickness (μm) | 0.23 | | | 0.17 | 0.35 | | | 0.17 | | | | | | ND | ND | | |

From the comparison of Examples 1 through 7 and Comparative Examples 1 and 2, it is found that the thermoplastic polymer compositions of the present invention are remarkably improved in the adhesion strength to a glass while maintaining good flexibility, mechanical properties, and formability by blending the polyvinyl acetal (B) into the thermoplastic elastomer (A). Meanwhile, from the comparison of Examples 1 through 7 and Comparative Examples 4 and 5, it is found that the thermoplastic polymer compositions of the present invention is improved in the flexibility while maintaining good adhesion to a glass by blending the thermoplastic elastomer (A) into the polyvinyl acetal (B).

As understood from the comparison of Examples 1 through 3, a tendency is found that, as the polyvinyl acetal (B) is blended in a greater amount, the hardness increases and the elongation decreases. At this point, the adhesion strength is also prone to decrease. As understood from the comparison of Examples 1, 4, and 5, it is found that, as the degree of acetalization becomes high and the vinyl alcohol units become less in the polyvinyl acetal (B), the average particle diameter of the polyvinyl acetal (B) becomes small (refer to Figs. 1 through 3) and the continuous layer of the polyvinyl acetal (B) becomes thin (refer to Figs. 5 through 7), and as a result, the adhesion strength is improved. In addition, a tendency is found from the comparison of Examples 1 through 7 and Example 12 that, in a case of the polyvinyl acetal (B) is blended in a large amount, the hardness becomes high and the elongation also decreases.

From the comparison of Examples 8 through 10 and Examples 1, 4, and 5, it is found that the adhesion strength can be improved even more by blending the thermoplastic elastomer (A2) containing a polar functional group. At this point, it is found that the average particle diameter of the polyvinyl acetal (B) becomes even smaller (refer to Fig. 4) and the continuous layer of the polyvinyl acetal (B) becomes even thinner (refer to Fig. 8). In addition, from the comparison with Comparative Example 3, it is found that the glass adhesion strength is obtained mainly due to the polyvinyl acetal (B).

Example 13

Using 100 parts by mass of the thermoplastic elastomer (A1-1), 30 parts by mass of the polyvinyl acetal (B-3), and 100 parts by mass of the softener for rubber, a thermoplastic polymer composition sheet was prepared according to the method of preparing a test specimen described in the above (1), and a laminate with a polar polymer was prepared according to the method of preparing a test specimen described in the above (2-2). Using these test specimens, hardness, tensile breaking strength, tensile breaking elongation, and adhesion strength were measured according to the methods of the above (3), (4), and (6). Results of them are put together and shown in Table 3.

Examples 14 and 15

A thermoplastic polymer sheet and a laminate were prepared in a method same as that of Example 13 other than modifying the type and the blended amount of the thermoplastic elastomer (A) and the type and the blended amount of the polyvinyl acetal (B) in Example 13 into the description in Table 3 for evaluation. Results of them are shown in Table 3.

Comparative Example 6

A thermoplastic polymer composition sheet was prepared in a method same as that of Example 13 other than blending 50 parts by mass of polypropylene in stead of the polyvinyl acetal (B-3) for evaluation. Results of them are shown in Table 3. The obtained thermoplastic polymer composition sheet was almost not adhered to the polar polymer sheet.

Comparative Example 7

A thermoplastic polymer composition sheet was attempted for preparation in a method same as that of Example 13 other than not using the polyvinyl acetal (B-3) in Example 13. However, due to a formation failure, it was not possible to obtain a sheet capable of evaluation.

Comparative Example 8

A thermoplastic polymer sheet was prepared in a method same as that of Example 13 other than blending 100 parts by mass of the thermoplastic elastomer (A1-3) in stead of the thermoplastic elastomer (A1-1) and not using the polyvinyl acetal (B-3) in Example 13 for evaluation. Results of them are shown in Table 3. Although the formability was improved compared with that of Comparative Example 7 by using the thermoplastic elastomer (A1-3), the obtained sheet was almost not adhered to the adherend resin.

[Table 3]

| | | Example 13 | Example 14 | Example 15 | Comparative Example 6 | Comparative Example 7 | Comparative Example 8 |
|---|---|---|---|---|---|---|---|
| Thermoplastic Elastomer (A) (parts by mass) | | | | | | | |
| A1-1 | | 100 | | 100 | 100 | 100 | |
| A1-3 | | | 100 | | | | 100 |
| A2-1 | | | | 45 | | | |
| Polyvinyl Acetal (B) (parts by mass) | | | | | | | |
| B-2 | | | | 15 | | | |
| B-3 | | 30 | 30 | 15 | | | |
| Softener for Rubber (parts by mass) | | 100 | 100 | 100 | 100 | 100 | 100 |
| Polypropylene (parts by mass) | | | | | 50 | | |
| Hardness [JIS A] | | 24 | 40 | 48 | 70 | | 33 |
| Tensile Breaking Strength (MPa) | | 5.8 | 2.3 | 7 | 18.7 | | 6.3 |
| Tensile Breaking Elongation (%) | | 1150 | 1050 | 1040 | 1050 | | 1200 |
| Adhesion Strength (N/25 mm) | PET | 17 | 25 | 4 | 0.2 | | 0 |
| | PC | 20 | >36 | 7 | 0.1 | | 0 |
| | PA6 | 16 | 20 | 10 | 0.2 | | 0.5 |
| | ABS | 21 | 25 | 14 | 0.1 | | 0.2 |
| | POM | 18 | 20 | 35 | 0.2 | | 0 |
| | PBT | 14 | 20 | 18 | 0 | | 0.1 |
| | PA66 | 13 | 18 | 8 | 0.7 | | 0.2 |
| | PP | 11 | >23* | 27 | 57 | | 38 |
| Formability | | A | A | A | A | B | A |
| * Material Fracture | | | | | | | |

Example 16

Using 100 parts by mass of the thermoplastic elastomer (A1-3), 30 parts by mass of the thermoplastic elastomer (A2-1), 30 parts by mass of the polyvinyl acetal (B-2), and 100 parts by mass of the softener for rubber, a thermoplastic polymer composition sheet was prepared according to the method of preparing a test specimen described in the above (1), and a laminate with a metal was prepared according to the method of preparing a test specimen described in the above (2-3). Using these test specimens, hardness, tensile breaking strength, tensile breaking elongation, and adhesion strength were measured according to the methods of the above (3), (4), and (6). Results of them are put together and shown in Table 4.

Examples 17 and 18

Thermoplastic polymer sheet and laminates were prepared in a method same as that of Example 16 other than

modifying the type and the blended amount of the thermoplastic elastomer (A) and the type and the blended amount of the polyvinyl acetal (B) in Example 16 into the description in Table 4 for evaluation.

Comparative Example 9

A thermoplastic polymer composition sheet was prepared in a method same as that of Example 17 other than blending 50 parts by mass of polypropylene in stead of the polyvinyl acetal (B-3) in Example 17 for evaluation. Results of them are shown in Table 4. The obtained sheet was almost not adhered to the metal plate.

Comparative Example 10

A thermoplastic polymer sheet was prepared in a method same as that of Example 17 other than not using the polyvinyl acetal (B-3) in Example 17 for evaluation. Results of them are shown in Table 4. The obtained sheet was almost not adhered to the metal plate.

Comparative Example 11

A thermoplastic polymer composition sheet was attempted for preparation in a method same as that of Example 18 other than not using the polyvinyl acetal (B-3) in Example 18. However, due to a formation failure, it was not possible to obtain a sheet capable of evaluation.

[Table 4]

| | | Example 16 | Example 17 | Example 18 | Comparative Example 9 | Comparative Example 10 | Comparative Example 11 |
|---|---|---|---|---|---|---|---|
| Thermoplastic Elastomer (A) (parts by mass) | | | | | | | |
| A1-1 | | | | 100 | | | 100 |
| A1-3 | | 100 | 100 | | 100 | 100 | |
| A2-1 | | 30 | | | | | |
| Polyvinyl Acetal (B) (parts by mass) | | | | | | | |
| B-2 | | 30 | | | | | |
| B-3 | | | 30 | 30 | | | |
| Softener for Rubber (parts by mass) | | 100 | 100 | 100 | 100 | 100 | 100 |
| Polypropylene (parts by mass) | | | | | 50 | | |
| Hardness [JIS A] | | 54 | 40 | 24 | 70 | 33 | |
| Tensile Breaking Strength (MPa) | | 7 | 2.3 | 5.8 | 18.7 | 6.4 | |
| Tensile Breaking Elongation (%) | | 1125 | 1050 | 1150 | 1050 | 1200 | |
| Adhesion Strength (N/25 mm) | Al | 40 | >23* | 19 | 0.2 | 0 | |
| | Mg Alloy | 31 | >25* | 28 | 0 | 0 | |
| Formability | | A | A | A | A | A | B |
| * Material Fracture | | | | | | | |

Example 19 - Not part of the invention

Using 100 parts by mass of the thermoplastic elastomer (A1-5) and 30 parts by mass of the polyvinyl acetal (B-2), a thermoplastic polymer composition sheet was prepared according to the method of preparing a test specimen described in the above (1), and a laminate was prepared according to the method of preparing a test specimen described in the above (2-1), (2-2), and (2-3). Using these test specimens, hardness, tensile breaking strength, tensile breaking elongation, and adhesion strength were measured according to the methods of the above (3), (4), and (6). Results of them are put together and shown in Table 6.

Example 20 not part of the invention and example 22

A thermoplastic polymer sheet and a laminate were prepared in a method same as that of Example 19 other than modifying the type and the blended amount of the thermoplastic elastomer (A) in Example 19 into the description in Table 5 for evaluation.

Comparative Example 12

A thermoplastic polymer composition sheet was prepared in a method same as that of Example 19 (not part of the invention) other than not using the polyvinyl acetal (B-2) in Example 19 (not part of the invention) for evaluation. Results of them are shown in Table 5. The obtained sheet was almost not adhered to the glass plate, the metal plate, and the adherend resin sheet.

Comparative Example 13

A thermoplastic polymer composition sheet was prepared in a method same as that of Example 20 (not part of the invention) other than not using the polyvinyl acetal (B-2) in Example 20 (not part of the invention) for evaluation. Results of them are shown in Table 5. The obtained sheet was almost not adhered to the glass plate, the metal plate, and the adherend resin sheet.

Comparative Example 14

A thermoplastic polymer composition sheet was prepared in a method same as that of Example 21 other than not using the polyvinyl acetal (B-2) in Example 21 for evaluation. Results of them are shown in Table 5. The obtained sheet was almost not adhered to the glass plate, the metal plate, and the adherend resin sheet.

[Table 5]

| | | *Example 19 | *Example 20 | Example 21 | Example 22 | Comparative Example 12 | Comparative Example 13 | Comparative Example 14 |
|---|---|---|---|---|---|---|---|---|
| Thermoplastic Elastomer (A) (parts by mass) | | | | | | | | |
| A1-5 | | 100 | | | | 100 | | |
| A1-6 | | | 100 | | | | 100 | |
| A1-4 | | | | 100 | 100 | | | 100 |
| A2-1 | | | | | 30 | | | |
| Polyvinyl Acetal (B) (parts by mass) | | | | | | | | |
| B-2 | | 30 | 30 | 30 | 30 | | | |
| Hardness [JIS A] | | 82 | 78 | 61 | 69 | 57 | 72 | 52 |
| Tensile Breaking Strength (MPa) | | 2.5 | 6.8 | 4.1 | 3.5 | 3.1 | 7.8 | 14 |
| Tensile Breaking Elongation (%) | | 250 | 1200 | 900 | 800 | 400 | 1100 | 1100 |
| Adhesion Strength (N/25 mm) | Glass | 12 | 10 | 17 | 34 | 0.1 | 0.3 | 3.3 |
| | Al | 4.4 | 28 | 35 | 30 | 0 | 2 | 1 |
| | POM | 8 | 7 | 11 | 23 | 0 | 0 | 1.5 |
| | ABS | 12 | 5.8 | 16 | 9.2 | 0 | 0 | 1 |
| Formability | | A | A | A | A | A | A | A |
| * not part of the invention | | | | | | | | |

## Claims

1. A thermoplastic polymer composition, comprising a styrene-based thermoplastic elastomer (A) and a polyvinyl acetal (B), wherein the thermoplastic elastomer (A) is a block copolymer, having a polymer block of an aromatic vinyl compound and a polymer block of a conjugated diene compound, or a hydrogenation product thereof, and wherein the polyvinyl acetal (B) is contained from 0.1 to 100 parts by mass in terms of 100 parts by mass of the thermoplastic elastomer (A).

2. The thermoplastic polymer composition according to claim 1, wherein particles of the polyvinyl acetal (B) are dispersed in a matrix of the thermoplastic elastomer (A).

3. The thermoplastic polymer composition according to claim 2, wherein the polyvinyl acetal (B) has an average particle diameter of 5 $\mu$m or less.

4. The thermoplastic polymer composition according to any one of claims 1 through 3, wherein JIS-A hardness according to JIS K6253 is 93 or less.

5. The thermoplastic polymer composition according to any one of claims 1 through 4, wherein the polyvinyl acetal (B) is obtained by acetalizing polyvinyl alcohol having an average degree of polymerization of from 100 to 4000.

6. The thermoplastic polymer composition according to any one of claims 1 through 5, wherein a degree of acetalization of the polyvinyl acetal (B) is from 55 to 88 mol%.

7. The thermoplastic polymer composition according to any one of claims 1 through 6, wherein the polyvinyl acetal (B) is polyvinyl butyral.

8. The thermoplastic polymer composition according to any one of claims 1 through 7, wherein the thermoplastic elastomer (A) comprises both a thermoplastic elastomer (A1) not containing a polar functional group and a thermoplastic elastomer (A2) containing a polar functional group, and a ratio by weight (A2/A1) thereof is from 0.1/100 to 100/0.1.

9. A shaped article, comprising the thermoplastic polymer composition according to any one of claims 1 through 8.

10. The shaped article according to claim 9, wherein the thermoplastic polymer composition is adhered to a ceramic or a metal.

11. The shaped article according to claim 10, wherein the thermoplastic polymer composition is adhered to a glass.

12. The shaped article according to claim 10 or 11, wherein a continuous layer of the polyvinyl acetal (B) exists at an interface between the thermoplastic polymer composition and the ceramic or the metal.

13. The shaped article according to claim 9, wherein the thermoplastic polymer composition is adhered to a polar polymer having a functional group selected from the group consisting of amide group, ester group, carbonate group, acetal group, ether group, sulfide group, nitrile group, hydroxyl group, carbonyl group, carboxyl group, amino group, and sulfonic acid group.

14. The shaped article according to claim 13, wherein the polar polymer is at least one selected from the group consisting of polyamide, polyester, polycarbonate, polyacetal, polyphenylene sulfide, ABS resin (acrylonitrile-butadiene-styrene copolymer), polyvinyl alcohol, ethylene-vinyl alcohol copolymer, polyvinyl acetal, polyvinyl acetate, poly(meth)acrylate, polyether, polyketone, ionomer, polyurethane, and polyurea.

15. An adhesive, comprising the thermoplastic polymer composition according to any one of claims 1 through 8.

## Patentansprüche

1. Thermoplastische Polymerzusammensetzung, umfassend ein thermoplastisches Elastomer (A) auf Styrol-Basis und ein Polyvinylacetal (B), wobei das thermoplastische Elastomer (A) ein Blockcopolymer mit einem Polymerblock

von einer aromatischen Vinylverbindung und einem Polymerblock von einer konjugierten Dienverbindung oder ein Hydrierungsprodukt davon ist, und wobei das Polyvinylacetal (B) in von 0,1 bis 100 Masse-Teile, bezogen auf 100 Masse-Teile des thermoplastischen Elastomers (A), enthalten ist.

**2.** Thermoplastische Polymerzusammensetzung gemäß Anspruch 1, wobei die Teilchen des Polyvinylacetals (B) in einer Matrix des thermoplastischen Elastomers (A) dispergiert sind.

**3.** Thermoplastische Polymerzusammensetzung gemäß Anspruch 2, wobei das Polyvinylacetal (B) einen durchschnittlichen Teilchendurchmesser von 5 $\mu$m oder weniger ausweist.

**4.** Thermoplastische Polymerzusammensetzung gemäß einem der Ansprüche 1 bis 3, wobei die JIS-A Härte gemäß JIS K6253 93 oder weniger beträgt.

**5.** Thermoplastische Polymerzusammensetzung gemäß einem der Ansprüche 1 bis 4, wobei das Polyvinylacetal (B) durch Acetalisieren von Polyvinylalkohol mit einem durchschnittlichen Polymerisationsgrad von 100 bis 4000 erhalten worden ist.

**6.** Thermoplastische Polymerzusammensetzung gemäß einem der Ansprüche 1 bis 5, wobei ein Acetalisierungsgrad des Polyvinylacetals (B) von 55 bis 88 Mol.-% beträgt.

**7.** Thermoplastische Polymerzusammensetzung gemäß einem der Ansprüche 1 bis 6, wobei das Polyvinylacetal (B) Polyvinylbutyral ist.

**8.** Plastische Polymerzusammensetzung gemäß einem der Ansprüche 1 bis 7, wobei das thermoplastische Elastomer (A) sowohl ein thermoplastisches Elastomer (A1), das keine polare funktionale Gruppe enthält, als auch ein thermoplastisches Elastomer (A2), das eine polare funktionale Gruppe enthält, umfaßt und ein Gewichtsverhältnis (A2/A1) von 0,1/100 bis 100/0,1 beträgt.

**9.** Formgegenstand, umfassend die thermoplastische Polymerzusammensetzung gemäß einem der Ansprüche 1 bis 8.

**10.** Formgegenstand gemäß Anspruch 9, wobei die thermoplastische Polymerzusammensetzung an eine Keramik oder ein Metall gebunden ist.

**11.** Formgegenstand gemäß Anspruch 10, wobei die thermoplastische Polymerzusammensetzung an ein Glas gebunden ist.

**12.** Formgegenstand gemäß Anspruch 10 oder 11, wobei eine kontinuierliche Schicht des Polyvinylacetals (B) an einer Grenzfläche zwischen der thermoplastischen Polymerzusammensetzung und der Keramik oder dem Metall vorliegt.

**13.** Formgegenstand gemäß Anspruch 9, wobei die thermoplastische Polymerzusammensetzung an ein polares Polymer mit einer funktionalen Gruppe, ausgewählt aus der Gruppe, bestehend aus einer Amidgruppe, einer Estergruppe, einer Carbonatgruppe, einer Acetalgruppe, einer Ethergruppe, einer Sulfidgruppe, einer Nitrilgruppe, einer Hydroxylgruppe, einer Carbonylgruppe, einer Carboxylgruppe, einer Aminogruppe und einer Sulfonsäuregruppe, gebunden ist.

**14.** Formgegenstand gemäß Anspruch 13, wobei das polare Polymer mindestens eines ist, ausgewählt aus der Gruppe, bestehend aus Polyamid, Polyester, Polycarbonat, Polyacetal, Polyphenylensulfid, ABS Harz(Acrylnitril-Butadien-Styrol-Copolymer), Polyvinylalkohol, Ethylen-Vinylalkohol-Copolymer, Polyvinylacetal, Polyvinylacetat, Poly(meth) acrylat, Polyether, Polyketon, Ionomer, Polyurethan und Polyharnstoff.

**15.** Haftmittel, umfassend die thermoplastische Polymerzusammensetzung gemäß einem der Ansprüche 1 bis 8.

## Revendications

**1.** Composition polymère thermoplastique, comprenant un élastomère thermoplastique à base de styrène (A) et un poly(vinylacétal)(B), dans laquelle l'élastomère thermoplastique (A) est un copolymère séquencé, ayant une séquence de polymère d'un composé vinyle aromatique et une séquence de polymère d'un composé diène conjugué,

ou un produit d'hydrogénation de celui-ci, et dans laquelle le poly(vinylacétal) (B) est contenu de 0,1 à 100 parties en masse pour 100 parties en masse de l'élastomère thermoplastique (A).

**2.** Composition polymère thermoplastique selon la revendication 1, dans laquelle les particules du poly(vinylacétal) (B) sont dispersées dans une matrice de l'élastomère thermoplastique (A).

**3.** Composition polymère thermoplastique selon la revendication 2, dans laquelle le poly(vinylacétal) (B) a un diamètre de particule moyen de 5 μm ou moins.

**4.** Composition polymère thermoplastique selon l'une quelconque des revendications 1 à 3, dans laquelle la dureté JIS-A selon la norme JIS K6253 est de 93 ou moins.

**5.** Composition polymère thermoplastique selon l'une quelconque des revendications 1 à 4, dans laquelle le poly (vinylacétal) (B) est obtenu par acétalisation de poly(alcool vinylique) ayant un degré moyen de polymérisation de 100 à 4 000.

**6.** Composition polymère thermoplastique selon l'une quelconque des revendications 1 à 5, dans laquelle un degré d'acétalisation du poly(vinylacétal) (B) est de 55 à 88 % en mole.

**7.** Composition polymère thermoplastique selon l'une quelconque des revendications 1 à 6, dans laquelle le poly (vinylacétal) (B) est le poly(vinylbutyral).

**8.** Composition polymère thermoplastique selon l'une quelconque des revendications 1 à 7, dans laquelle l'élastomère thermoplastique (A) comprend à la fois un élastomère thermoplastique (A1) ne contenant pas de groupe fonctionnel polaire et un élastomère thermoplastique (A2) contenant un groupe fonctionnel polaire, et un rapport en poids (A2/A1) entre ceux-ci est de 0,1/100 à 100/0,1.

**9.** Article façonné, comprenant la composition polymère thermoplastique selon l'une quelconque des revendications 1 à 8.

**10.** Article façonné selon la revendication 9, dans lequel la composition polymère thermoplastique est mise à adhérer à une céramique ou un métal.

**11.** Article façonné selon la revendication 10, dans lequel la composition polymère thermoplastique est mise à adhérer à un verre.

**12.** Article façonné selon la revendication 10 ou 11, dans lequel une couche continue du poly(vinylacétal) (B) existe à une interface entre la composition polymère thermoplastique et la céramique ou le métal.

**13.** Article façonné selon la revendication 9, dans lequel la composition polymère thermoplastique est mise à adhérer à un polymère polaire ayant un groupe fonctionnel choisi dans le groupe constitué par un groupe amide, un groupe ester, un groupe carbonate, un groupe acétal, un groupe éther, un groupe sulfure, un groupe nitrile, un groupe hydroxyle, un groupe carbonyle, un groupe carboxyle, un groupe amino et un groupe acide sulfonique.

**14.** Article façonné selon la revendication 13, dans lequel le polymère polaire est au moins un polymère choisi dans le groupe constitué par un poly(amide), un poly(ester), un poly(carbonate), un poly(acétal), un poly(sulfure de phénylène), une résine ABS (copolymère d'acrylonitrile-butadiène-styrène), un poly(alcool vinylique), un copolymère d'éthylène-alcool vinylique, un poly(vinylacétal), un poly(acétate de vinyle), un poly((méth)acrylate), un poly(éther), une poly(cétone), un ionomère, un poly(uréthane) et une poly(urée).

**15.** Adhésif, comprenant la composition polymère thermoplastique selon l'une quelconque des revendications 1 à 8.

1

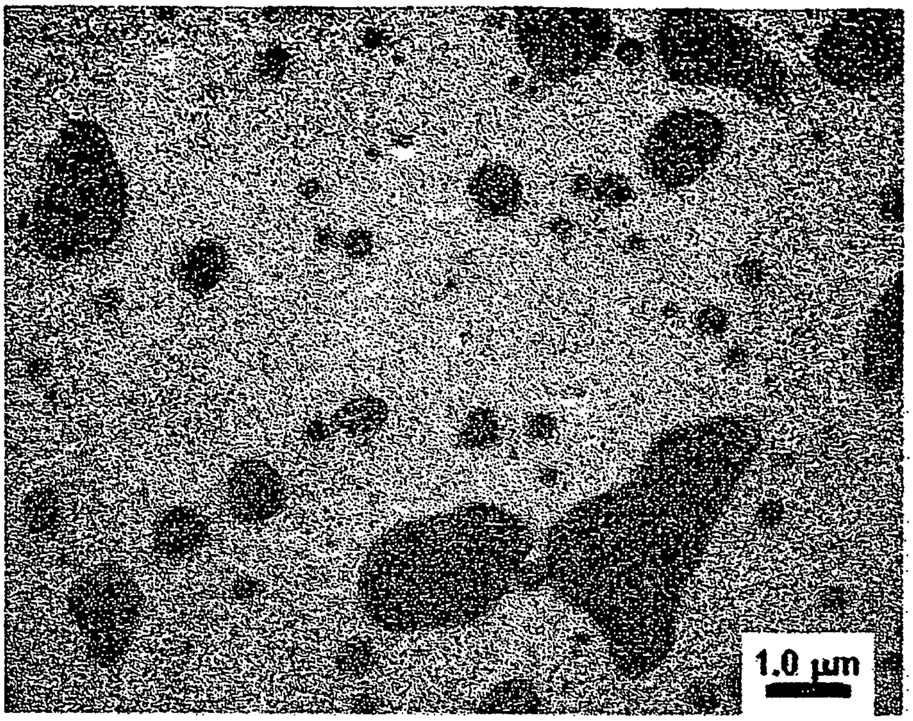


2

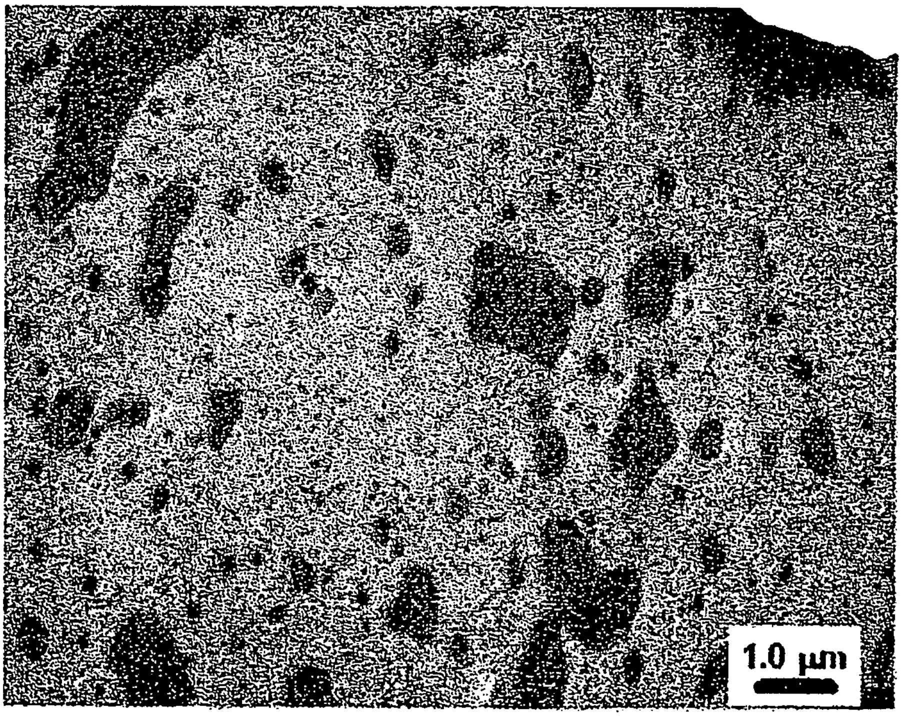

3

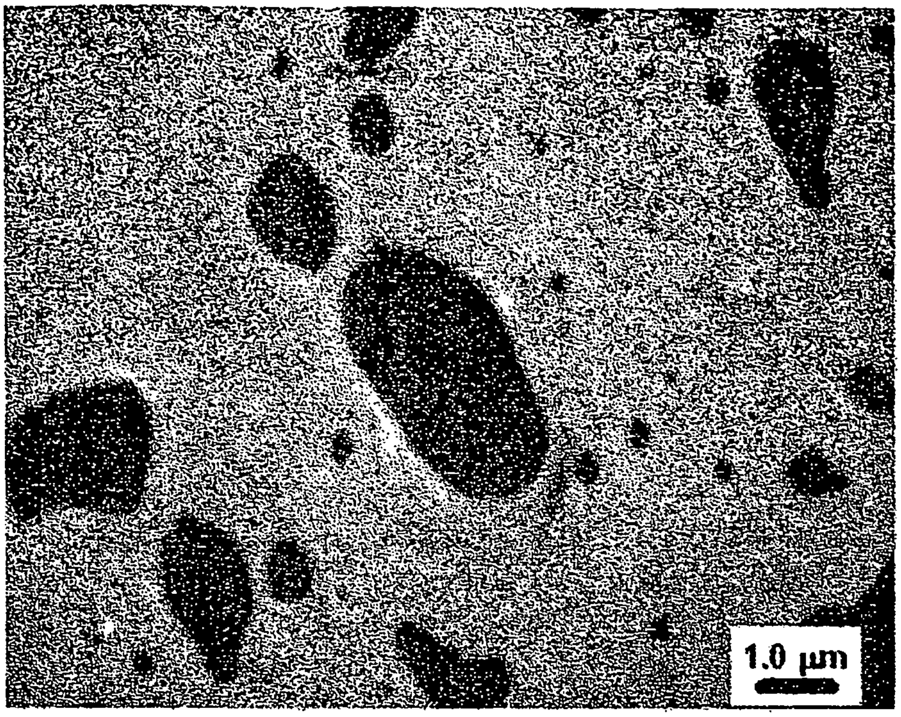


4

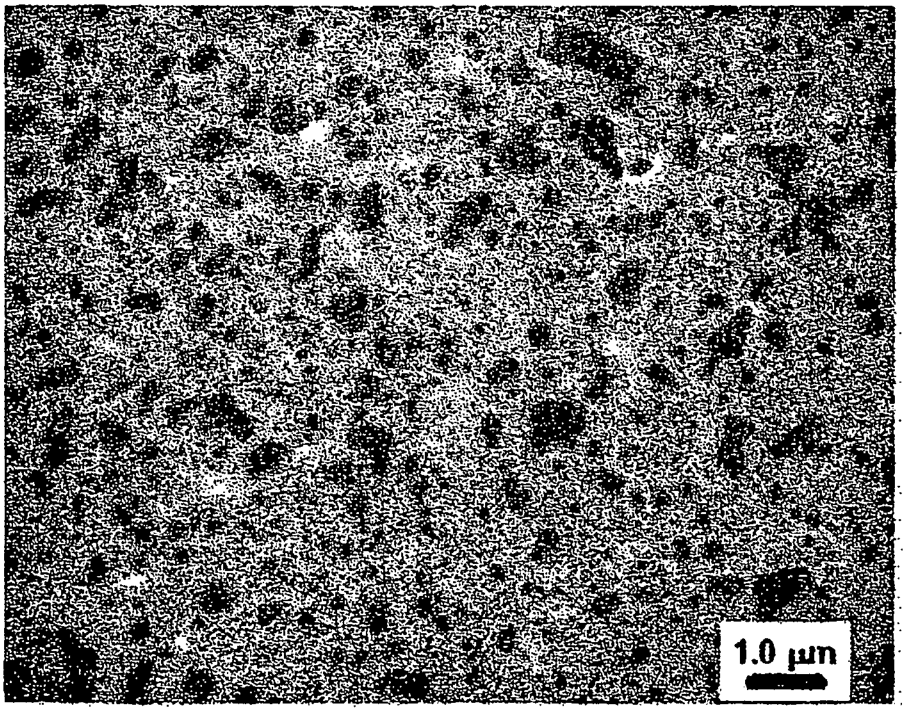

5

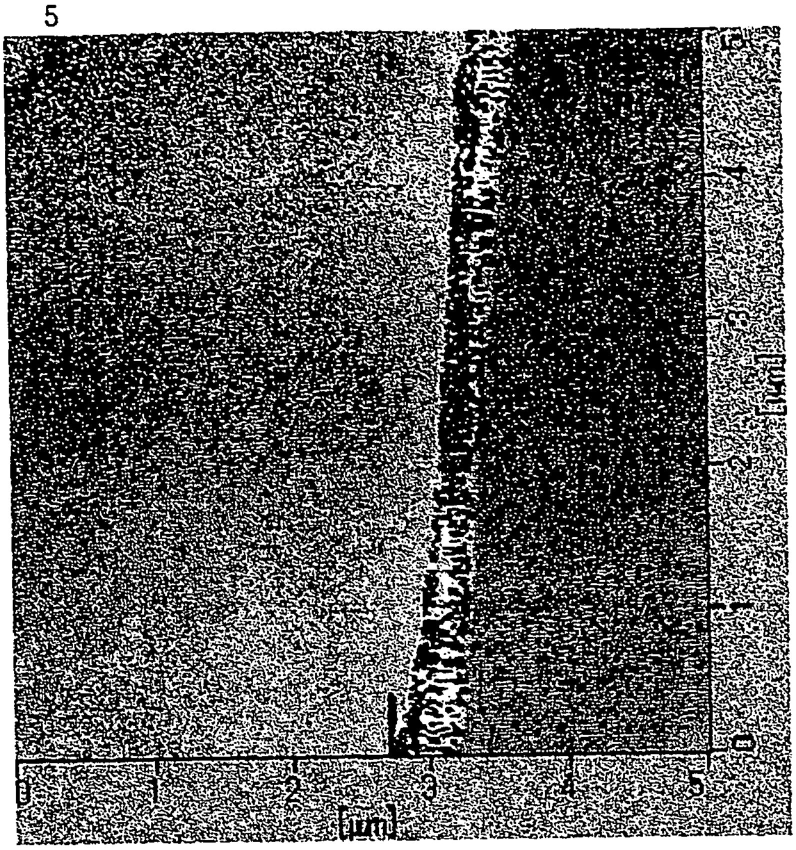


6

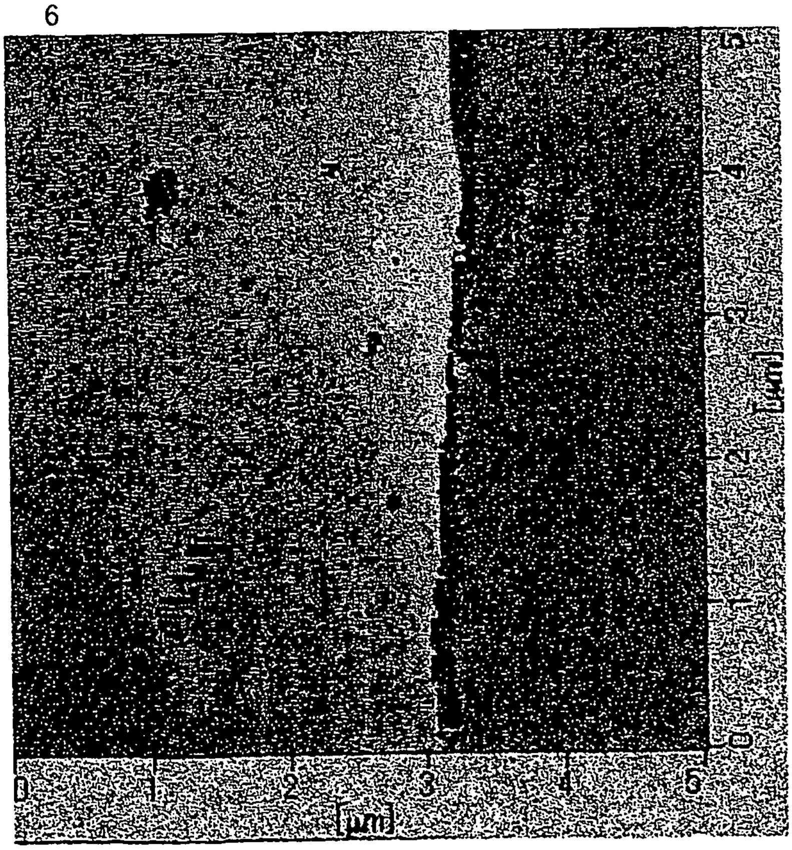

7

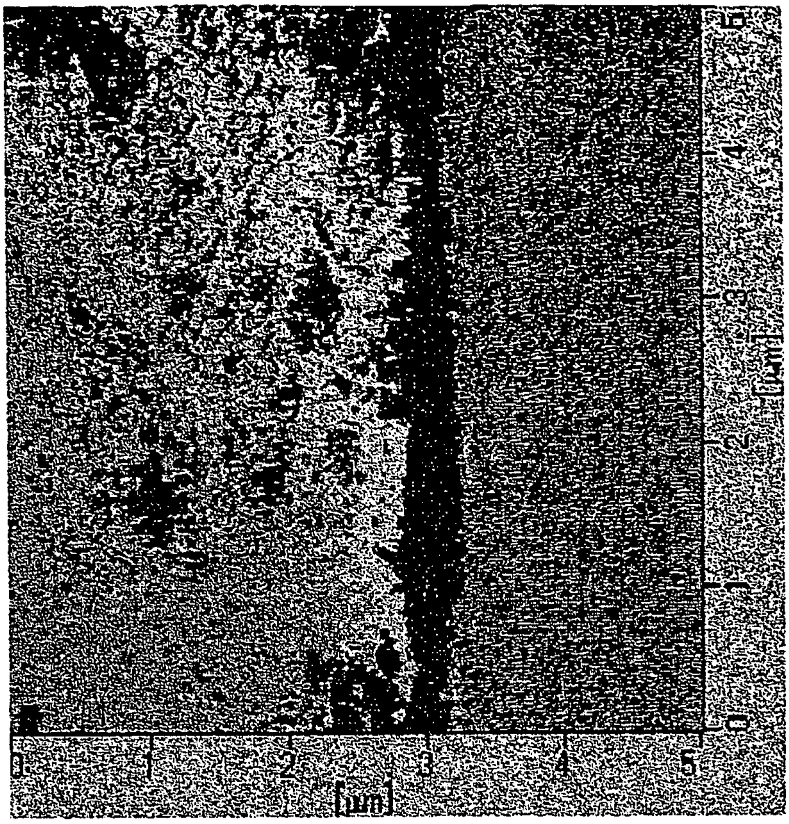


8

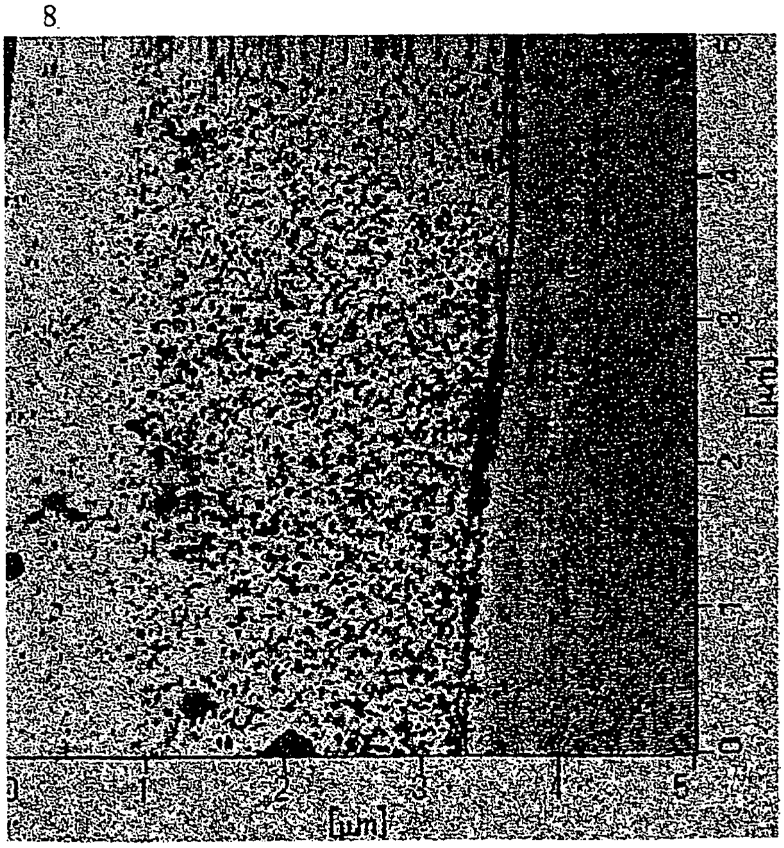

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006291019 A
- JP 2006206715 A
- JP 2004195717 A
- JP 63025005 A
- JP 6023910 A

### Non-patent literature cited in the description

- KURAMIRON U 2000. Kuraray Co., Ltd,
- Novatec PP MA3. Japan Polychem Corporation
- Bottle TR-8550. Teijin Limited
- Panlite I-1225. Teijin Limited
- UBE nylon 1013B. Ube Industries, Ltd,
- CYCOLAC EX-111. Ube Cycon, Ltd,
- DURACON M90-44. Polyplastics Co., Ltd,
- Toraycon 1041. Toray Industries, Inc,
- Leona 1300G. Asahi Kasei Corporation